(19) Europäisches Patentamt
European Patent Office
Office européen des brevets

(11) EP 4 622 307 A1

(12) EUROPEAN PATENT APPLICATION
published in accordance with Art. 153(4) EPC

(43) Date of publication:
24.09.2025 Bulletin 2025/39

(51) International Patent Classification (IPC):
H04W 4/029 (2018.01)

(21) Application number: 24787874.7

(52) Cooperative Patent Classification (CPC):
H04W 4/029; H04W 4/40; H04W 12/04

(22) Date of filing: 18.03.2024

(86) International application number:
PCT/CN2024/082309

(87) International publication number:
WO 2024/212768 (17.10.2024 Gazette 2024/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.04.2023 CN 202310456029

(71) Applicant: Huawei Technologies Co., Ltd.
Shenzhen, Guangdong 518129 (CN)

(72) Inventors:
• XIE, Zichen
  Shenzhen, Guangdong 518129 (CN)
• WANG, Chengzhao
  Shenzhen, Guangdong 518129 (CN)

(74) Representative: Gill Jennings & Every LLP
The Broadgate Tower
20 Primrose Street
London EC2A 2ES (GB)

(54) POSITIONING METHOD AND RELATED APPARATUS

(57) This application provides a positioning method and a related apparatus. This application provides a method for positioning a to-be-positioned node by a vehicle through a plurality of positioning nodes. The positioning nodes may be divided into a primary node and a secondary node. The primary node in the vehicle may establish a connection to the to-be-positioned node, and the secondary node may communicate with and perform ranging with the to-be-positioned node through the connection established by the primary node. Further, the vehicle may determine a location of the to-be-positioned node based on a ranging result of the secondary node. Finally, the vehicle may provide one or more functions for a user based on the location of the to-be-positioned node. According to the technical solutions provided in this application, the vehicle can obtain the location of the to-be-positioned node more quickly and accurately, to provide a corresponding function for the user, and reduce waiting time of the user.

FIG. 4A

## Description

This application claims priority to Chinese Patent Application No. 202310456029.X, filed with the China National Intellectual Property Administration on April 14, 2023, and entitled "POSITIONING METHOD AND RELATED APPARATUS", which is incorporated herein by reference in its entirety.

## TECHNICAL FIELD

This application relates to the field of positioning technologies, and in particular, to a positioning method and a related apparatus.

## BACKGROUND

Currently, a vehicle usually needs to position an external node, to implement a function such as insensible unlocking, automatic parking, or automatic vehicle locking. The vehicle may include one or more positioning nodes, and the positioning node is configured to position the external node. The positioning nodes may be located at different locations of the vehicle. For a vehicle including a plurality of positioning nodes, how to quickly and accurately determine a location of an external node is an urgent problem to be resolved.

## SUMMARY

This application provides a positioning method and a related apparatus. Positioning nodes in a vehicle may be divided into a primary node and a secondary node. The primary node may establish a connection to a to-be-positioned node, and the secondary node may communicate with and perform ranging with the to-be-positioned node through the connection established by the primary node. According to the foregoing method, the vehicle can obtain a location of the to-be-positioned node more quickly and accurately, to provide a corresponding function for a user, reduce waiting time of the user, and improve user experience.

According to a first aspect, this application provides a positioning method. The positioning method is applied to a vehicle, the vehicle includes a primary node and one or more secondary nodes, the primary node communicates with the one or more secondary nodes through a first connection, and the method includes: The primary node establishes a second connection to a to-be-positioned node, where the second connection is a wireless network connection; the primary node receives first data from the one or more secondary nodes through the first connection, where the first data includes first ranging information obtained by the one or more secondary nodes by performing ranging with the to-be-positioned node through the second connection; and the primary node determines a location of the to-be-positioned node based on the first data.

The primary node and the secondary node on the vehicle are collectively referred to as a positioning node. The to-be-positioned node may include an electronic device of a user. A data transmission manner of the second connection may include but is not limited to Bluetooth, NearLink, and a wireless local area network. The first ranging information may be obtained after the one or more secondary nodes perform ranging with the to-be-positioned node. The first ranging information may include intermediate data obtained after the one or more secondary nodes perform ranging with the to-be-positioned node, or may include one or more distances obtained after the one or more secondary nodes perform ranging with the to-be-positioned node. The second connection may perform communication in a peer-to-peer manner. The vehicle may provide a corresponding function for the user when the location of the to-be-positioned node meets a first condition. The foregoing function may include insensible unlocking, automatic vehicle locking, or the like.

It may be understood that when the vehicle positions the to-be-positioned node, only the primary node needs to establish the connection to the to-be-positioned node, and the secondary node may reuse the connection established between the primary node and the to-be-positioned node. According to the method, time for positioning the to-be-positioned node by the vehicle can be reduced, and the vehicle can provide a corresponding service for the user more quickly, thereby improving use experience of the user.

With reference to the first aspect, in some embodiments, the positioning method further includes: The primary node obtains a first parameter from the to-be-positioned node through the second connection, where the first parameter is used by the one or more secondary nodes to communicate with the to-be-positioned node through the second connection; and the primary node sends the first parameter to the one or more secondary nodes.

With reference to the first aspect, in some embodiments, the first parameter includes one or more of the following: a frequency, a frequency hopping sequence, and a key of the second connection.

The first parameter may be a connection parameter of the second connection. The first parameter may include the frequency, the frequency hopping sequence, and the key of the second connection. The one or more secondary nodes need to receive the first parameter sent by the primary node, so that the one or more secondary nodes can communicate with and perform ranging with the to-be-positioned node through the second connection. When the second connection uses Bluetooth for communication, the first parameter may further include one or more of a media access control bit address of the primary node, a media access control bit address of the secondary node, and a media access control bit address of the to-be-positioned node. When data transmission manners of the second connection are different, the first parameter may include different parameters.

With reference to the first aspect, in some embodiments, the positioning method further includes: The primary node determines first clock information with the to-be-positioned node through the second connection, where the first clock information is for indicating the to-be-positioned node to communicate with the primary node or the one or more secondary nodes in a first time period.

The first clock information may be determined, through negotiation, by the primary node and the to-be-positioned node through the second connection. The first clock information corresponds to the first time period. The first time period may be a time period in which the to-be-positioned node is idle.

It may be understood that, after the primary node and the to-be-positioned node determine the first clock information through negotiation, the to-be-positioned node may determine, based on the first clock information, that the to-be-positioned node needs to communicate with the primary node or the one or more secondary nodes in the first time period. The to-be-positioned node may keep in an idle state in the first time period. In this way, it can be avoided that when the primary node or the one or more secondary nodes communicate with and perform ranging with the to-be-positioned node, the to-be-positioned node cannot reply to the primary node or the one or more secondary nodes in a timely manner because the to-be-positioned node is in a busy state, thereby affecting ranging accuracy.

Optionally, the primary node may determine a first ranging parameter with the to-be-positioned node through the second connection. The first ranging parameter may include a first ranging method. The primary node may send the first ranging parameter to the one or more secondary nodes. The one or more secondary nodes may communicate with and perform ranging with the to-be-positioned node based on the first ranging parameter.

It may be understood that the primary node may determine the ranging parameter with the to-be-positioned node. In this way, the secondary node may perform ranging with the to-be-positioned node by using the ranging parameter determined by the primary node, to improve efficiency of ranging between the secondary node and the to-be-positioned node.

With reference to the first aspect, in some embodiments, the first ranging information includes one or more distances obtained by the one or more secondary nodes by performing ranging with the to-be-positioned node.

Any one of the one or more secondary nodes is used as an example. After the secondary node performs ranging with the to-be-positioned node, the secondary node and the to-be-positioned node may separately obtain a part of intermediate data. The to-be-positioned node may send the intermediate data obtained by the to-be-positioned node to the secondary node. The secondary node may determine a distance between the secondary node and the to-be-positioned node based on the intermediate data. In this way, the first ranging information received by the primary node may include the distance that is between the secondary node and the to-be-positioned node and that is obtained by the secondary node through calculation after the secondary node communicates with and performs ranging with the to-be-positioned node.

With reference to the first aspect, in some embodiments, the first data further includes second ranging information obtained by the to-be-positioned node by performing ranging with the one or more secondary nodes through the second connection, and the method further includes: The primary node receives the second ranging information from the to-be-positioned node through the second connection; and the primary node determines one or more distances between the one or more secondary nodes and the to-be-positioned node based on the first ranging information and the second ranging information.

Any one of the one or more secondary nodes is used as an example. The first ranging information may include intermediate data obtained by the secondary node after the secondary node performs ranging with the to-be-positioned node. The second ranging information may include intermediate data obtained by the to-be-positioned node after the secondary node performs ranging with the to-be-positioned node. The secondary node may send the first ranging information to the primary node, and the to-be-positioned node may send the second ranging information to the primary node. In this way, the primary node may determine the distance between the secondary node and the to-be-positioned node based on the intermediate data obtained by the secondary node by performing ranging with the to-be-positioned node.

It may be understood that after the secondary node performs ranging with the to-be-positioned node, both the secondary node and the to-be-positioned node may obtain a part of intermediate data. The secondary node may summarize the intermediate data, and determine a location between the secondary node and the to-be-positioned node. Alternatively, the primary node may summarize the intermediate data, and the primary node determines a location between the secondary node and the to-be-positioned node. In this way, a calculation amount of a processing unit of the one or more secondary nodes can be reduced, and the primary node performs ranging and positioning operations, thereby reducing total costs of deploying the positioning node.

With reference to the first aspect, in some embodiments, the one or more secondary nodes include a first secondary node and a second secondary node, the first time period includes a second time period and a third time period, and the method further includes: The primary node sends second clock information to the first secondary node, where the second clock information is for indicating the first secondary node to communicate with the to-be-positioned node in the second time period through the second connection; and the primary node sends third clock information to the second secondary node, where the third clock information is for indicating the second secondary node to communicate with the to-be-positioned node in the third time period through the second connection, and end time of the second time period is earlier than start time of the third time period.

The first secondary node may also be referred to as a secondary node 1, and the second secondary node may also be referred to as a secondary node 2. The second clock information corresponds to the second time period. The third clock information corresponds to the third time period. The first time period determined by the primary node through negotiation with the to-be-positioned node is a large time period, and the primary node may divide the first time period corresponding to the first clock information into the second time period and the third time period. Then, the primary node may allocate the second time period to the first secondary node, and allocate the third time period to the second secondary node.

It may be understood that the primary node may allocate different time periods to the secondary node. In each time period, only one secondary node communicates with and performs ranging with the to-be-positioned node. In this way, a conflict that occurs when secondary nodes communicate with the to-be-positioned node at the same time and that affects accuracy of ranging performed by the secondary node can be avoided.

With reference to the first aspect, in some embodiments, the first ranging information includes third ranging information obtained by the first secondary node by performing ranging with the to-be-positioned node through the second connection and fourth ranging information obtained by the second secondary node by performing ranging with the to-be-positioned node through the second connection, and that the primary node receives first data from the one or more secondary nodes through the first connection includes: The primary node receives the third ranging information from the first secondary node through the first connection, and the primary node receives the fourth ranging information from the second secondary node through the first connection.

With reference to the first aspect, in some embodiments, the third ranging information includes a first distance between the first secondary node and the to-be-positioned node, and the fourth ranging information includes a second distance between the second secondary node and the to-be-positioned node.

With reference to the first aspect, in some embodiments, the first data further includes fifth ranging information obtained by the to-be-positioned node by performing ranging with the first secondary node through the second connection and sixth ranging information obtained by the to-be-positioned node by performing ranging with the second secondary node through the second connection, and the method further includes:

The primary node receives the fifth ranging information from the to-be-positioned node through the second connection; the primary node determines a first distance between the first secondary node and the to-be-positioned node based on the third ranging information and the fifth ranging information; the primary node receives the sixth ranging information from the to-be-positioned node through the second connection; and the primary node determines a second distance between the second secondary node and the to-be-positioned node based on the fourth ranging information and the sixth ranging information.

After the first secondary node performs ranging with the to-be-positioned node, the first secondary node may obtain intermediate data C, and the to-be-positioned node may obtain intermediate data D. After the second secondary node performs ranging with the to-be-positioned node, the second secondary node may obtain intermediate data E, and the to-be-positioned node may obtain intermediate data F.

Optionally, the to-be-positioned node may send the intermediate data D to the first secondary node. The first secondary node may determine the first distance between the first secondary node and the to-be-positioned node based on the intermediate data. The to-be-positioned node may send the intermediate data E to the second secondary node. The second secondary node may determine the second distance between the second secondary node and the to-be-positioned node based on the intermediate data. In this case, the third ranging information includes the first distance, and the fourth ranging information includes the second distance. In this way, the third ranging information and the fourth ranging information that are received by the primary node include the distance obtained by the secondary node through calculation.

Optionally, the first secondary node may send the intermediate data C to the primary node, and the to-be-positioned node may send the intermediate data D to the primary node. The second secondary node may send the intermediate data E to the primary node, and the to-be-positioned node may send the intermediate data F to the primary node. In this case, the third ranging information includes the intermediate data C, the fourth ranging information includes the intermediate data E, the fifth ranging information includes the intermediate data D, and the sixth ranging information includes the intermediate data F. The primary node may determine the first distance based on the third ranging information and the fifth ranging information, and determine the second distance based on the second ranging information and the sixth ranging information. In this embodiment, the primary node does not receive the distance calculated by the secondary node, but receives the intermediate data obtained after the secondary node performs ranging with the to-be-positioned node. The primary node needs to determine the distance between the first secondary node and the to-be-positioned node and the distance between the second secondary node and the to-be-positioned node based on the intermediate data.

It may be understood that, after the secondary node performs ranging with the to-be-positioned node, the primary node may determine the distance between the secondary node and the to-be-positioned node and the location of the to-be-positioned node. In this way, total costs of deploying the positioning node can be reduced.

With reference to the first aspect, in some embodiments, that the primary node determines a location of the to-be-positioned node based on the first data includes: The primary node determines the location of the to-be-positioned node based on the first distance and the second distance.

With reference to the first aspect, in some embodiments, the first data further includes a third distance between the primary node and the to-be-positioned node, and the method further includes: The primary node performs ranging with the to-be-positioned node through the second connection, to obtain seventh ranging information; the primary node receives eighth ranging information from the to-be-positioned node; and the primary node determines the third distance based on the seventh ranging information and the eighth ranging information.

With reference to the first aspect, in some embodiments, that the primary node determines a location of the to-be-positioned node based on the first data includes: The primary node determines the location of the to-be-positioned node based on the first distance, the second distance, and the third distance.

The first distance may be referred to as a distance L2, the second distance may be referred to as a distance L3, and the third distance may be referred to as a distance L1. The location of the to-be-positioned node may include a distance between the to-be-positioned node and the vehicle and/or an orientation angle of the to-be-positioned node relative to the vehicle.

It may be understood that the primary node may also have a ranging module, and the primary node may also perform ranging with the to-be-positioned node. In this way, the primary node may determine the location of the to-be-positioned node based on distances between more positioning nodes and the to-be-positioned node, thereby improving positioning accuracy.

With reference to the first aspect, in some embodiments, the positioning method further includes: The primary node sends the location of the to-be-positioned node to the to-be-positioned node.

It may be understood that, after determining the location of the to-be-positioned node, the primary node may further send the location of the to-be-positioned node to the to-be-positioned node. In this way, the to-be-positioned node may determine a distance between the vehicle and the to-be-positioned node and/or an orientation angle of the vehicle relative to the to-be-positioned node. Further, the to-be-positioned node may prompt the user of a location of the vehicle through user interface display, voice broadcasting, or the like.

According to a second aspect, this application provides a positioning method. The positioning method is applied to a vehicle, the vehicle includes a primary node and a first secondary node, the primary node communicates with the first secondary node through a first connection, the primary node establishes a second connection to a to-be-positioned node, the second connection is a wireless network connection, and the positioning method includes: The first secondary node receives a first parameter from the primary node through the first connection; and the first secondary node communicates with the to-be-positioned node based on the first parameter through the second connection, and the first secondary node performs ranging with the to-be-positioned node, to obtain ninth ranging information, where the ninth ranging information is for determining a location of the to-be-positioned node.

The first secondary node may be referred to as a secondary node 1. A data transmission manner of the second connection may include but is not limited to Bluetooth, NearLink, and a wireless local area network. The primary node may establish the second connection to the to-be-positioned node, and determine a connection parameter of the second connection. The first parameter may include the connection parameter of the second connection. In this way, after receiving the first parameter, the first secondary node may communicate with and perform ranging with the to-be-positioned node through the second connection. The ninth ranging information may include intermediate data C obtained after the first secondary node communicates with and performs ranging with the to-be-positioned node.

It may be understood that when the vehicle positions the to-be-positioned node, only the primary node needs to establish the connection to the to-be-positioned node, and the secondary node may reuse the connection established between the primary node and the to-be-positioned node. In this way, a speed of ranging between the secondary node and the to-be-positioned node can be improved.

With reference to the second aspect, in some embodiments, before that the first secondary node communicates with the to-be-positioned node based on the first parameter through the second connection, the method further includes: The first secondary node receives second clock information sent by the primary node, where the second clock information includes a second time period; and the first secondary node determines that time is in the second time period.

It may be understood that, the first secondary node may receive the second clock information determined by the primary node, and communicate with and perform ranging with the to-be-positioned node after determining the time reaches the second time period corresponding to the second clock information. In this way, a case in which a conflict with ranging time of another secondary node is generated and ranging accuracy is affected can be avoided.

Optionally, the positioning method further includes: The first secondary node receives a first ranging parameter from the primary node, where the first ranging parameter may include a first ranging method. That the first secondary node performs ranging with the to-be-positioned node specifically includes: The first secondary node performs ranging with the to-be-positioned node based on the first ranging parameter. Alternatively, the first secondary node determines a second ranging parameter with the to-be-positioned node through the second connection, and the second ranging parameter may include a second ranging method. That the first secondary node performs ranging with the to-be-positioned node specifically includes: The first secondary node performs ranging with the to-be-positioned node based on the second ranging parameter.

It may be understood that the first secondary node may receive the ranging parameter negotiated by the primary node with the to-be-positioned node, and communicate with and perform ranging with the to-be-positioned node based on the ranging parameter negotiated by the primary node. In this way, efficiency of ranging between the first secondary node and the to-be-positioned node can be improved. Alternatively, the first secondary node may negotiate the ranging parameter with the to-be-positioned node, and communicate with and perform ranging with the to-be-positioned node based on the ranging parameter negotiated by the first secondary node. In this way, the first secondary node may select an appropriate ranging method based on a feature of the node.

With reference to the second aspect, in some embodiments, the first secondary node sends the ninth ranging information to the primary node through the first connection, where the ninth ranging information is for determining a first distance between the first secondary node and the to-be-positioned node.

With reference to the second aspect, in some embodiments, the first secondary node receives tenth ranging information sent by the to-be-positioned node, where the tenth ranging information is obtained by the to-be-positioned node by performing ranging with the first secondary node through the second connection; the first secondary node determines a first distance between the first secondary node and the to-be-positioned node based on the ninth ranging information and the tenth ranging information; and the first secondary node sends the first distance to the primary node through the first connection.

It may be understood that the first secondary node may send the ninth ranging information to the primary node, and the to-be-positioned node may send the tenth ranging information to the primary node. In this way, the primary node may determine the first distance based on the ninth ranging information and the tenth ranging information. The tenth ranging information may include intermediate data D. Alternatively, the first secondary node may receive the tenth ranging information of the to-be-positioned node, and then the first secondary node may determine the first distance, and send the first distance to the primary node.

With reference to the second aspect, in some embodiments, the first parameter includes one or more of the following: a frequency, a frequency hopping sequence, and a key of the second connection.

It may be understood that the first secondary node may communicate with and perform ranging with the to-be-positioned node through the second connection based on the first parameter. The first parameter may include the frequency and/or the frequency hopping sequence of the second connection. In this way, the first secondary node may keep a channel of the first secondary node consistent with a channel of the to-be-positioned node. The first parameter may further include the key. In this way, after receiving a packet encrypted by the to-be-positioned node, the first secondary node may decrypt the packet by using the key, and extract information from the packet.

According to a third aspect, this application provides a communication apparatus. The communication apparatus is used in a vehicle, the vehicle further includes one or more secondary nodes, and the communication apparatus includes: a communication unit, configured to communicate with the one or more secondary nodes through a first connection, where the communication unit is further configured to establish a second connection to a to-be-positioned node, where the second connection is a wireless network connection; and the communication unit is further configured to receive first data from the one or more secondary nodes through the first connection, where the first data includes first ranging information obtained by the one or more secondary nodes by performing ranging with the to-be-positioned node through the second connection; and a processing unit, configured to determine a location of the to-be-positioned node based on the first data.

With reference to the third aspect, in some embodiments, the communication unit is further configured to obtain a first parameter from the to-be-positioned node through the second connection, where the first parameter is used by the one or more secondary nodes to perform ranging with the to-be-positioned node through the second connection; and the communication unit is further configured to send the first parameter to the one or more secondary nodes.

With reference to the third aspect, in some embodiments, the communication unit is further configured to determine first clock information with the to-be-positioned node, where the first clock information is for indicating the to-be-positioned node to communicate with the communication unit or the one or more secondary nodes in a first time period.

With reference to the third aspect, in some embodiments, the first ranging information includes one or more distances between the one or more secondary nodes and the to-be-positioned node.

With reference to the third aspect, in some embodiments, the first data further includes second ranging information obtained by the to-be-positioned node by performing ranging with the one or more secondary nodes through the second connection, and the communication unit is further configured to receive the second ranging information from the to-be-positioned node through the second connection; and the processing unit is further configured to determine one or more distances between the one or more secondary nodes and the to-be-positioned node based on the first ranging information and the second ranging information.

With reference to the third aspect, in some embodiments, the one or more secondary nodes include a first secondary node and a second secondary node, and the first time period includes a second time period and a third time period; the communication unit is further configured to send second clock information to the first secondary node, where the second clock information is for indicating the first secondary node to communicate with the to-be-positioned node in the second time period through the second connection; and the communication unit is further configured to send third clock information to the second secondary node, where the third clock information is for indicating the second secondary node to communicate with the to-be-positioned node in the third time period through the second connection, and end time of the second time period is earlier than start time of the third time period.

With reference to the third aspect, in some embodiments, the first ranging information includes third ranging information obtained by the first secondary node by performing ranging with the to-be-positioned node through the second connection and fourth ranging information obtained by the second secondary node by performing ranging with the to-be-positioned node through the second connection, and that the communication unit receives first data from the one or more secondary nodes through the first connection includes: The communication unit receives the third ranging information from the first secondary node through the first connection; and the communication unit receives the fourth ranging information from the second secondary node through the first connection.

With reference to the third aspect, in some embodiments, the third ranging information includes a first distance between the first secondary node and the to-be-positioned node, and the fourth ranging information includes a second distance between the second secondary node and the to-be-positioned node.

With reference to the third aspect, in some embodiments, the first data further includes fifth ranging information obtained by the to-be-positioned node by performing ranging with the first secondary node through the second connection and sixth ranging information obtained by the to-be-positioned node by performing ranging with the second secondary node through the second connection; the communication unit is further configured to receive the fifth ranging information and the sixth ranging information from the to-be-positioned node; the processing unit is further configured to determine a first distance between the first secondary node and the to-be-positioned node based on the third ranging information and the fifth ranging information; and the processing unit is further configured to determine a second distance between the second secondary node and the to-be-positioned node based on the fourth ranging information and the sixth ranging information.

With reference to the third aspect, in some embodiments, that the processing unit determines a location of the to-be-positioned node based on the first data includes: The processing unit determines the location of the to-be-positioned node based on the first distance and the second distance.

With reference to the third aspect, in some embodiments, the first data further includes a third distance between the communication apparatus and the to-be-positioned node, and the communication apparatus further includes a ranging unit, the ranging unit is configured to perform ranging with the to-be-positioned node through the second connection, to obtain seventh ranging information; the communication unit is further configured to receive eighth ranging information from the to-be-positioned node; and the processing unit is further configured to determine the third distance based on the seventh ranging information and the eighth ranging information.

With reference to the third aspect, in some embodiments, the communication unit is further configured to send the location of the to-be-positioned node to the to-be-positioned node.

With reference to the third aspect, in some embodiments, the first parameter includes one or more of the following: a frequency, a frequency hopping sequence, and a key of the second connection.

According to a fourth aspect, this application provides a communication apparatus. The communication apparatus is used in a vehicle, the vehicle further includes a primary node, the primary node communicates with the communication apparatus through a first connection, the primary node establishes a second connection to a to-be-positioned node, the second connection is a wireless network connection, and the method includes: a communication unit, configured to receive a first parameter from the primary node through the first connection, where the communication unit is further configured to communicate with the to-be-positioned node based on the first parameter through the second connection; and a ranging unit, configured to perform ranging with the to-be-positioned node through the second connection, to obtain ninth ranging information, where the ninth ranging information is for determining a location of the to-be-positioned node.

With reference to the fourth aspect, in some embodiments, before the communication unit communicates with the to-be-positioned node based on the first parameter through the second connection, the communication apparatus further includes: a processing unit, where the communication unit receives second clock information sent by the primary node, where the second clock information includes a second time period; and the processing unit determines that time is in the second time period.

With reference to the fourth aspect, in some embodiments, the communication unit is further configured to send the ninth ranging information to the primary node through the first connection, where the ninth ranging information is for determining a first distance between the communication apparatus and the to-be-positioned node.

With reference to the fourth aspect, in some embodiments, the communication unit is further configured to receive tenth ranging information sent by the to-be-positioned node, where the tenth ranging information is obtained by the to-be-positioned node by performing ranging with the ranging unit through the second connection; the processing unit is further configured to determine a first distance between the communication apparatus and the to-be-positioned node based on the ninth ranging information and the tenth ranging information; and the communication unit is further configured to send the first distance to the primary node through the first connection.

With reference to the fourth aspect, in some embodiments, the first parameter includes one or more of the following: a frequency, a frequency hopping sequence, and a key of the second connection.

According to a fifth aspect, this application provides a vehicle. The vehicle includes a primary node and one or more secondary nodes, the primary node is configured to perform the method according to any one of the implementations of the first aspect, and the secondary node is configured to perform the method according to any one of the implementations of the second aspect.

According to a sixth aspect, this application provides a vehicle. The vehicle includes a memory and a processor, and the memory may store computer-executable instructions; and when the processor executes the computer-executable instructions, the vehicle may be enabled to implement the method according to any one of the possible implementations of the first aspect.

According to a seventh aspect, this application provides a vehicle. The vehicle includes a memory and a processor, and the memory may store computer-executable instructions; and when the processor executes the computer-executable instructions, the vehicle may be enabled to implement the method according to any one of the possible implementations of the second aspect.

According to an eighth aspect, this application provides a computer-readable storage medium. The computer-readable storage medium stores a computer program or computer instructions, and the computer program or the computer instructions are executed by a processor to implement the method according to any one of the implementations of the first aspect.

According to a ninth aspect, this application provides a computer-readable storage medium. The computer-readable storage medium stores a computer program or computer instructions, and the computer program or the computer instructions are executed by a processor to implement the method according to any one of the implementations of the second aspect.

According to a tenth aspect, an embodiment of this application provides a computer program product. When the computer program product is executed by a processor, the method according to any one of the implementations of the first aspect is implemented.

According to an eleventh aspect, an embodiment of this application provides a computer program product. When the computer program product is executed by a processor, the method according to any one of the implementations of the second aspect is implemented.

According to a twelfth aspect, an embodiment of this application provides a chip. The chip includes a processor and a memory, the memory is configured to store a computer program or computer instructions, and the processor is configured to execute the computer program or the computer instructions stored in the memory, so that the chip performs the method according to any one of the implementations of the first aspect.

According to a thirteenth aspect, an embodiment of this application provides a chip. The chip includes a processor and a memory, the memory is configured to store a computer program or computer instructions, and the processor is configured to execute the computer program or the computer instructions stored in the memory, so that the chip performs the method according to any one of the implementations of the second aspect.

The solutions provided in the fifth aspect to the thirteenth aspect are used to implement or cooperate with the method correspondingly provided in the first aspect or the second aspect. Therefore, the solutions can achieve same or corresponding beneficial effect as the corresponding method in the first aspect or the second aspect. Details are not described herein again.

**BRIEF DESCRIPTION OF DRAWINGS**

FIG. 1 is a diagram of a scenario in which a vehicle positions a to-be-positioned node according to an embodiment of this application;
FIG. 2 is a diagram of a system architecture of communication between a positioning node and a to-be-positioned node according to an embodiment of this application;
FIG. 3 is a diagram of a system architecture of communication between a positioning node and a to-be-positioned node according to an embodiment of this application;

FIG. 4A to FIG. 4C are a schematic interaction flowchart of a positioning method according to an embodiment of this application;

FIG. 5 is a diagram of ranging between a positioning node and a to-be-positioned node according to an embodiment of this application;

FIG. 6 is a diagram of positioning a to-be-positioned node by a vehicle according to an embodiment of this application;

FIG. 7 is a diagram of a structure of a communication apparatus according to an embodiment of this application;

FIG. 8 is a diagram of a structure of another communication apparatus according to an embodiment of this application;

FIG. 9 is a diagram of a structure of a physical entity of a positioning device according to an embodiment of this application; and

FIG. 10 is a diagram of a structure of a physical entity of a positioning device according to an embodiment of this application.

## DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular expression forms used in this specification and the appended claims of this application are also intended to include plural expression forms, unless otherwise clearly specified in the context. It should be further understood that the term "and/or" as used in this application means and includes any or all possible combinations of one or more of the listed items.

The following terms "first" and "second" are merely used for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

This application provides a positioning method. For ease of understanding, the following first describes related terms and concepts used in embodiments of this application.

(1) Reliable connection

The reliable connection is a communication connection in which a sender can determine whether a receiver receives data during data transmission. In the reliable connection, after receiving the data, the receiver usually needs to send acknowledgment information to the sender, to indicate that the receiver has received the data.

(2) Unreliable connection

The unreliable connection is a communication connection in which the sender cannot determine whether the receiver receives data during data transmission. In the unreliable connection, the sender only sends the data, regardless of whether the receiver receives the data.

(3) Broadcasting

Broadcasting is an unreliable data communication method. A network that uses broadcasting for communication may be referred to as a broadcasting network. In the broadcasting network, all network nodes share a same network transmission channel. When one node in the broadcasting network sends data through the shared network transmission channel, all other nodes may receive the data through the network transmission channel.

(4) Peer-to-peer technology

The peer-to-peer (peer-to-peer, P2P) technology is also referred to as a peer-to-peer Internet technology. P2P communication is a reliable communication method. A network that uses the P2P technology for communication may be referred to as a P2P network. In the P2P network, the sender can directly transmit the data to the receiver connected to the sender. In the P2P network, the sender and the receiver can pass through other nodes on a physical link, but are directly connected logically.

A vehicle may include one or more positioning nodes, and the positioning node may be configured to position an external node. The external node that needs to be positioned by the vehicle may be referred to as a to-be-positioned node. The vehicle may determine a location of the external node based on a positioning result of the one or more positioning nodes, to provide a function such as insensible unlocking, automatic parking, or automatic vehicle locking. Herein, a scenario in which a vehicle positions a to-be-positioned node according to this application is first described.

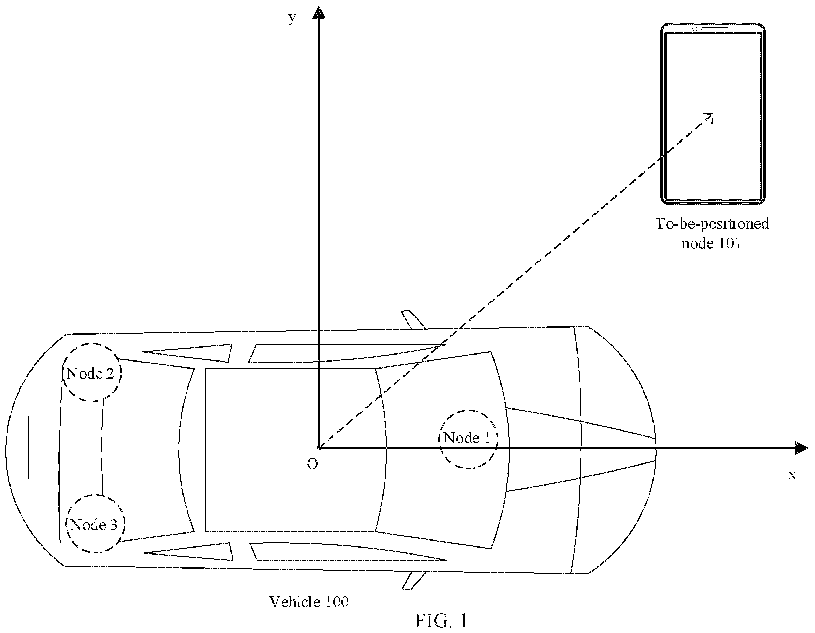

**FIG. 1 is an example of a diagram of a scenario in which a vehicle positions a to-be-positioned node.**

As shown in FIG. 1, the vehicle 100 may include three positioning nodes: a node 1, a node 2, and a node 3. The node 1, the node 2, and the node 3 may be deployed at different locations of the vehicle 100.

In some embodiments, the positioning node may be deployed inside a cockpit of the vehicle 100. The positioning node may be integrated inside an electronic device in the vehicle 100, or may be deployed inside a skylight or a side of the cockpit of the vehicle 100. In some other embodiments, the positioning node may alternatively be deployed on an external body of the vehicle 100. A location and a manner of deploying the positioning node in the vehicle 100 are not limited in embodiments of this application.

The positioning node may include one or more antennas. The antenna in the positioning node may be configured to communicate with and perform ranging with a to-be-positioned node. The one or more antennas in the positioning node may have different postures and directions. In embodiments of this application, a quantity of antennas in the positioning node and the posture and the direction of the antenna are not limited.

The positioning node may include a processing module and a communication module. The communication module may be configured to communicate with another node through a wired connection or a wireless connection.

In some embodiments, the positioning node may include a ranging module. The ranging module may be configured to perform ranging with the to-be-positioned node, to obtain intermediate data. The intermediate data may be for calculating a distance between the positioning node and the to-be-positioned node. For example, the intermediate data may include one or more of the following: time in which the positioning node sends a ranging packet to the to-be-positioned node, time in which the to-be-positioned node receives a same ranging packet, a difference between the time in which the positioning node sends a ranging packet to the to-be-positioned node and the time in which the to-be-positioned node receives a same ranging packet, and the like. The processing module may process the intermediate data obtained by the ranging module, and determine information such as the distance and/or a direction (or a relative angle) between the positioning node and the to-be-positioned node.

In some embodiments, the communication module of the positioning node may obtain ranging information sent by another node and/or the to-be-positioned node. Optionally, the ranging information may include one or more distances between another positioning node and the to-be-positioned node. The processing module of the positioning node may determine the location of the to-be-positioned node based on the one or more distances between the another positioning node and the to-be-positioned node. Optionally, the ranging information may further include one or more pieces of intermediate data obtained after the another positioning node performs ranging with the to-be-positioned node. The processing module may determine the distance between the another positioning node and the to-be-positioned node based on the one or more pieces of intermediate data, to determine the location of the to-be-positioned node.

The to-be-positioned node 101 may be an electronic device such as a smartphone, a smart watch, or a smart band, or may be a near field communication (near field communication, NFC) smart card or the like. The to-be-positioned node 101 may include a ranging module and a communication module.

In some embodiments, the to-be-positioned node 101 may communicate with and perform ranging with the positioning node in the vehicle 100 in a broadcasting manner. When the to-be-positioned node 101 sends one ranging packet, all positioning nodes in the vehicle 100 may receive the ranging packet, and reply to the ranging packet.

Broadcasting is an unreliable connection, and the packet may be lost during ranging between the positioning node and the to-be-positioned node 101. In addition, a conflict may also occur on a link when a plurality of positioning nodes reply. Finally, it is difficult to exchange more data between the positioning node and the to-be-positioned node, and ranging accuracy is low.

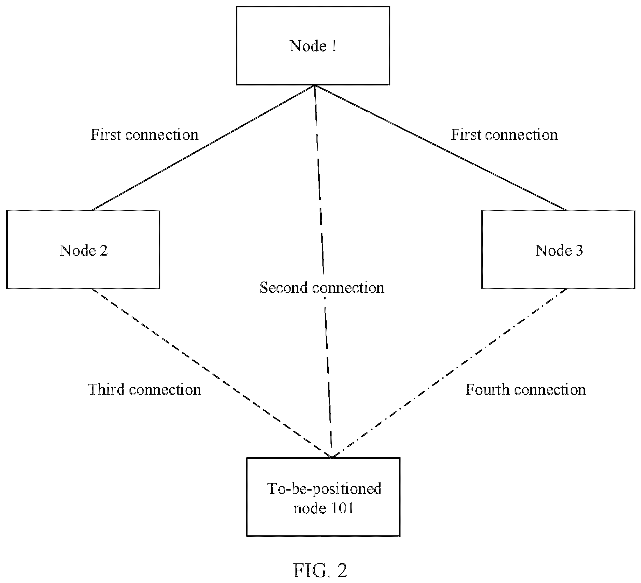

In some embodiments, the positioning node may separately establish a connection to the to-be-positioned node 101, to communicate with and perform ranging with the to-be-positioned node 101. As shown in FIG. 2, the node 1, the node 2, and the node 3 may communicate with each other through a first connection. The node 1 may establish a second connection to the to-be-positioned node 101. Then, the node 1 may communicate with and perform ranging with the to-be-positioned node 101 through the second connection, to obtain a distance L1 between the node 1 and the to-be-positioned node 101. The node 2 may establish a third connection to the to-be-positioned node 101. Then the node 2 may communicate with and perform ranging with the to-be-positioned node 101 through the third connection, to obtain a distance L2 between the node 2 and the to-be-positioned node 101. Similarly, the node 3 may obtain a distance L4 after establishing a fourth connection to the to-be-positioned node 101. Finally, the vehicle may determine the location of the to-be-positioned node 101 based on the distance L1, the distance L2, and the distance L3.

Because the positioning nodes need to sequentially establish connections to the to-be-positioned node and then perform ranging, the entire ranging takes long time. In some embodiments, a plurality of positioning nodes in the vehicle 100 may include one primary node and one or more secondary nodes. The primary node may communicate with the one or more secondary nodes through a first connection. In addition, the primary node may further establish a second connection to the to-be-positioned node 101, and send a first parameter associated with the second connection to the one or more secondary nodes. In this way, the one or more secondary nodes may communicate with and perform ranging with the to-be-positioned node based on the first parameter through the second connection, to obtain one or more pieces of ranging information. Finally, the primary node may determine one or more distances between the one or more secondary nodes and the to-be-positioned node 101 based on the one or more pieces of ranging information, to determine the location of the to-be-positioned node 101. The vehicle may provide a corresponding service for the user when a relative location between the to-be-positioned node 101 and the vehicle 100 meets a specific condition. For example, the vehicle 100 may be automatically unlocked when a distance between the to-be-positioned node 101 and the vehicle 100 is less than a specific distance threshold. Further, the vehicle may further adjust a location of a seat, to facilitate the user to get on the vehicle. The distance threshold may be 1 meter, 2 meters, or 3 meters. A value of the distance threshold is not limited in embodiments of this application.

It may be learned from the foregoing method that, in a process in which the plurality of positioning nodes in the vehicle 100 position the to-be-positioned node, the secondary node may communicate with the to-be-positioned node through a communication connection established between the primary node and the to-be-positioned node, to implement ranging between the secondary node and the to-be-positioned node. The primary node may summarize ranging information of all positioning nodes and the to-be-positioned node, to determine a location of the secondary node. According to the foregoing method, the secondary nodes do not need to separately establish communication connections to the to-be-positioned node. This can shorten time for positioning the plurality of positioning nodes and the to-be-positioned node, and improve positioning efficiency. Further, the vehicle 100 may quickly determine the location of the to-be-positioned node, thereby improving a response speed of providing the corresponding service for the user, and providing better user experience for the user.

For ease of description and better understanding, in subsequent embodiments of this application, an example in which the vehicle 100 positions the to-be-positioned node 101 through the three positioning nodes (the node 1, the node 2, and the node 3) is used to describe a positioning method and a related apparatus provided in embodiments of this application. The node 1 may be referred to as a first node. The node 2 may be referred to as a second node. The node 3 may be referred to as a third node. Persons skilled in the art should understand that the vehicle 100 may include more or fewer positioning nodes. For a method for positioning the to-be-positioned node 101 through more or fewer included positioning nodes, refer to the method for positioning the to-be-positioned node 101 through the node 1, the node 2, and the node 3. A method for positioning another quantity of positioning nodes is not described in detail in this application again.

In some embodiments, only one positioning node in the vehicle may establish a connection to the to-be-positioned node, and another positioning node may reuse the foregoing connection to communicate with and perform ranging with the to-be-positioned node. In this way, time for establishing the connection by the positioning node during ranging can be reduced. The following specifically describes a positioning method provided in embodiments of this application.

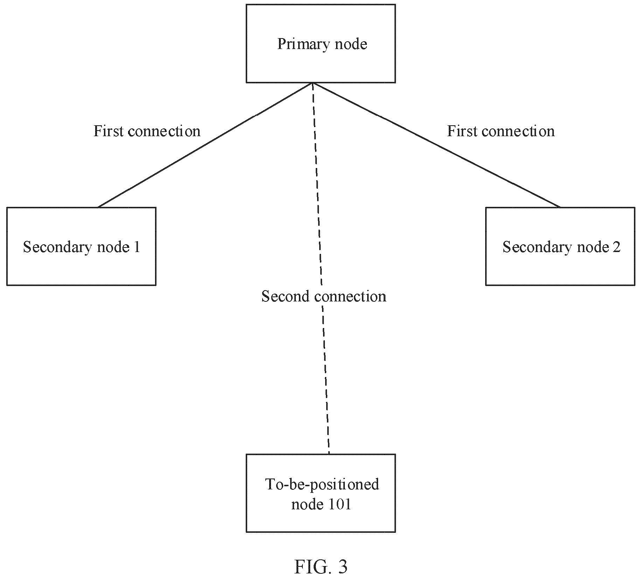

**FIG. 3 is an example of a diagram of a system architecture of communication between a positioning node and a to-be-positioned node according to an embodiment of this application.**

As shown in FIG. 3, a primary node may be any one of a node 1, a node 2, and a node 3. A positioning node other than the primary node is a secondary node. For ease of understanding, an example in which the node 1 is a primary node, the node 2 is a secondary node 1, and the node 3 is a secondary node 2 is used herein for description. This is not limited to the node 1 being used as a primary node, and another positioning node may alternatively be used as a primary node. Positioning nodes used as a primary node and a secondary node are not limited in this embodiment of this application.

A communication connection between the primary node and all the secondary nodes may be referred to as a first connection. That is, the primary node may communicate with each secondary node through the first connection.

In some embodiments, the first connection may include a wireless network connection. The first connection may include one or more wireless data transmission manners. For example, the wireless data transmission manner may include a wireless local area network (wireless local area network, WLAN) (for example, a wireless fidelity (wireless fidelity, Wi-Fi) network), Bluetooth (Bluetooth, BT), a near field communication (near field communication, NFC) technology, an infrared (infrared, IR) technology, an ultra-wideband (ultra-wideband, UWB), a NearLink technology, and the like.

In some other embodiments, the first connection may include a wired network connection. The first connection may include one or more wired data transmission manners. For example, the wired data transmission manner may be that the positioning nodes are connected to and communicate with each other through a controller local area network (controller area network, CAN) bus, a vehicle-mounted ethernet (ethernet) local interconnect network (local interconnect network, LIN) bus, a FlexRay bus, a wireless local area network (Wireless Local Area Network, WLAN) bus, and a commonly used vehicle-mounted network system (media oriented systems, MOST) bus of the vehicle 100.

This is not limited to the wireless network connection and the wired network connection. In a possible implementation, the connection manner of the first connection may include both the wireless network connection and the wired network connection. In addition, data transmission manners between the positioning nodes may alternatively be different. For example, the primary node and the secondary node 1 may communicate with each other through a Bluetooth connection, and the primary node and the secondary node 2 may communicate with each other through a CAN bus in a broadcasting manner. The connection manner and the data transmission manner included in the first connection are not limited in this embodiment of this application.

The primary node may establish a second connection to the to-be-positioned node 101. The second connection may be a wireless network connection. The primary node may perform peer-to-peer communication with the to-be-positioned node 101. For example, a data transmission manner of the second connection may include but is not limited to Bluetooth, Wi-Fi, and a NearLink technology. The data transmission manner of the second connection is not limited in this embodiment of this application.

The secondary node 1 and the secondary node 2 may reuse the second connection between the primary node and the to-be-positioned node 101 for communication and ranging. The primary node may send, to the secondary node 1 and the secondary node 2 through the first connection, a first parameter associated with the second connection. The first parameter may include one or more of the following: a frequency, a frequency hopping sequence, and a key of the second connection. In this way, the secondary node 1 and the secondary node 2 may use the second connection based on the first parameter, to communicate with and perform ranging with the to-be-positioned node.

In a possible implementation, the positioning node in the diagram of the architecture shown in FIG. 3 may further include one or more child nodes. The one or more child nodes may establish a communication connection to the secondary node 1 and/or the secondary node 2. The secondary node 1 and the secondary node 2 may coordinate child nodes connected to the secondary node 1 and the secondary node 2 to perform ranging on the to-be-positioned node 101. For a method in which the secondary node 1 and the secondary node 2 coordinate the child nodes to communicate with and perform ranging with the to-be-positioned node 101, refer to a method in which the primary node coordinates the secondary node 1 and the secondary node 2 to communicate with and perform ranging with the to-be-positioned node 101 in subsequent embodiments. Details are not described herein.

Optionally, a communication connection may also be included between the secondary node 1 and the secondary node 2. A communication connection state, a connection manner, and a data transmission manner between the secondary node 1 and the secondary node 2 are not limited in this embodiment of this application.

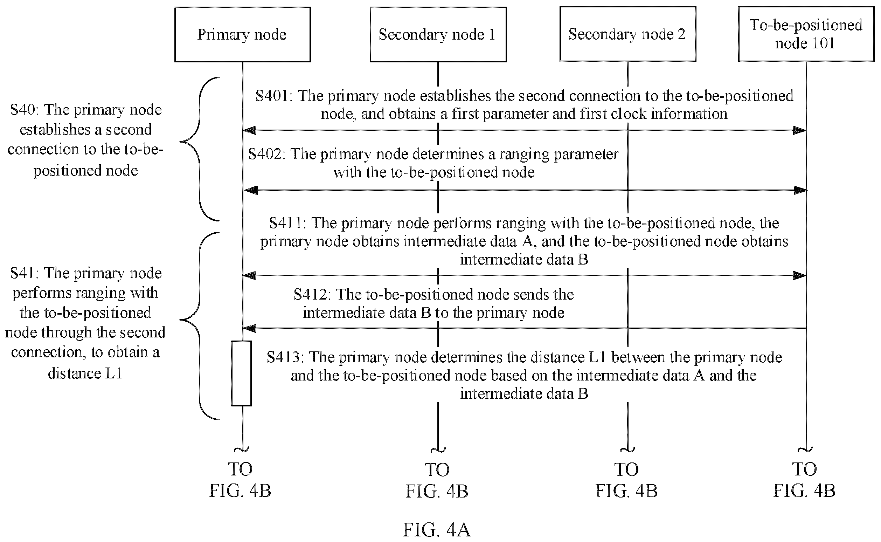

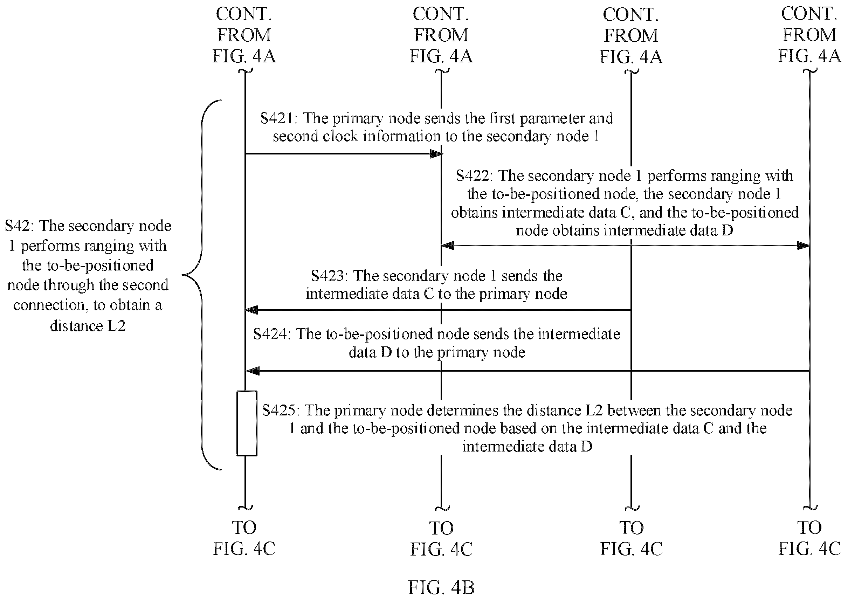

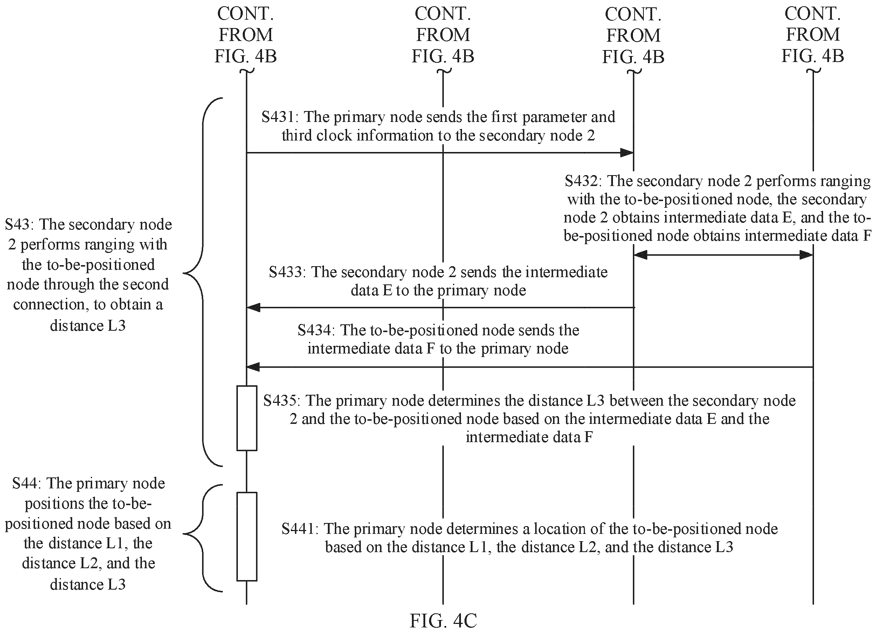

**FIG. 4A to FIG. 4C are an example of a schematic interaction flowchart of another positioning method according to an embodiment of this application.**

As shown in FIG. 4A to FIG. 4C, the positioning method may include but is not limited to the following steps.

S40: That a primary node establishes a second connection to a to-be-positioned node includes:

S401: The primary node establishes the second connection to the to-be-positioned node, and obtains a first parameter and first clock information.

The primary node may establish the second connection to the to-be-positioned node 101. The primary node may negotiate the first parameter with the to-be-positioned node 101. The first parameter may include a connection parameter necessary for communication through the second connection, for example, a frequency hopping sequence, a frequency, and a key.

For example, the second connection is a Bluetooth communication connection. When Bluetooth is in an enabled state, the to-be-positioned node 101 may broadcast data based on a specific periodicity. The broadcast data may include a "connectable" flag. The primary node may scan the broadcast data of the to-be-positioned node 101, and initiate a connection request to the to-be-positioned node 101. The connection request may include a media access control (media access control, MAC) address of the primary node, a MAC address of the to-be-positioned node 101, and time in which the two parties send and receive data. The to-be-positioned node 101 may receive the connection request sent by the primary node, and enter a connected state. The MAC addresses may be random device addresses of the primary node and the to-be-positioned node 101, or may be public device addresses. The primary node and the to-be-positioned node 101 may agree on the frequency hopping sequence. It may be understood that communication can be performed only when the primary node and the to-be-positioned node 101 send and receive data on a same channel. The primary node and the to-be-positioned node 101 may store the agreed frequency hopping sequence, and the two parties may be on a same channel in a connection process. In this case, the first parameter may include the MAC address of the to-be-positioned node and the frequency hopping sequence.

In some embodiments, the first parameter may further include a packet encryption key. The primary node may further initiate a packet encryption request to the to-be-positioned node 101. The primary node may negotiate with the to-be-positioned node 101 to obtain the key. When communicating with the to-be-positioned node 101, the primary node may encrypt a packet by using the key. When the primary node receives, through the second connection, a packet sent by a peer end (namely, the to-be-positioned node 101), the primary node may decrypt the packet by using the foregoing key, to obtain information in the packet. When the to-be-positioned node 101 receives, through the second connection, a packet sent by a peer end (for example, the primary node, a secondary node 1, or a secondary node 2), the to-be-positioned node 101 may decrypt the packet by using the foregoing key, to obtain information in the packet.

In some embodiments, the second connection between the primary node and the to-be-positioned node 101 may be a Wi-Fi connection. The primary node and the to-be-positioned node may negotiate the key. The first parameter may include a Wi-Fi frequency and a key. The Wi-Fi frequency corresponds to a Wi-Fi operating channel. The key may include a pairwise transient key (pairwise transient key, PTK) to packet encryption.

It may be understood that the first parameter may be different when data transmission manners between the primary node and the to-be-positioned node are different. A parameter that may be included in the first parameter is not limited in this embodiment of this application.

In some embodiments, the primary node may determine the first clock information with the to-be-positioned node 101. The first clock information may include a first time period. The to-be-positioned node 101 may determine the first time period based on a running state of the to-be-positioned node 101. The first time period may be a time period in which the to-be-positioned node 101 is in an idle state. In this way, the to-be-positioned node 101 may reserve the first time period for a positioning node that communicates with and performs ranging with the to-be-positioned node 101 through the second connection. Any positioning node may communicate with the to-be-positioned node 101 in the first time period through the second connection, to implement ranging. This can avoid a case in which some ranging information is inaccurate because the to-be-positioned node 101 is in a busy state and cannot respond to the positioning node in a timely manner when the positioning node communicates with and performs ranging with the to-be-positioned node 101. It may be understood that, before ranging, the primary node negotiates the first time period with the to-be-positioned node 101, so that ranging accuracy and ranging efficiency can be improved.

S402: The primary node determines a ranging parameter with the to-be-positioned node.

In some embodiments, the primary node may further determine the ranging parameter with the to-be-positioned node 101. In this way, when the primary node or the secondary node subsequently performs ranging with the to-be-positioned node 101, the primary node or the secondary node does not need to negotiate the ranging parameter, but directly uses the ranging parameter negotiated by the primary node, thereby improving ranging efficiency. The ranging parameter may include a ranging method.

In some embodiments, the ranging parameter determined between the primary node and the to-be-positioned node 101 may be used only when the primary node performs ranging with the to-be-positioned node 101. Another secondary node may additionally negotiate the ranging parameter with the to-be-positioned node 101.

S41: That the primary node performs ranging with the to-be-positioned node through the second connection, to obtain a distance L1 includes:

S411: The primary node performs ranging with the to-be-positioned node, the primary node obtains intermediate data A, and the to-be-positioned node obtains intermediate data B.

S412: The to-be-positioned node sends the intermediate data B to the primary node.

S413: The primary node determines the distance L1 between the primary node and the to-be-positioned node based on the intermediate data A and the intermediate data B.

In some embodiments, the primary node may perform ranging with the to-be-positioned node 101, to obtain the distance L1 between the primary node and the to-be-positioned node. The distance L1 may also be referred to as a third distance.

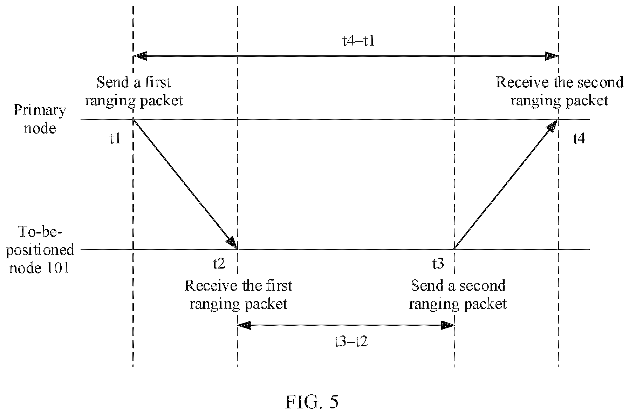

For example, an embodiment of this application provides a ranging method between the primary node and the to-be-positioned node. As shown in FIG. 5, the primary node may send a first ranging packet to the to-be-positioned node 101 at a moment t1. In addition, the primary node records time t1 at which the primary node sends the first ranging packet. The to-be-positioned node 101 may receive, at a moment t2, the first ranging packet sent by the primary node. In addition, the to-be-positioned node 101 may record time t2 at which the to-be-positioned node 101 receives the first ranging packet. At a moment t3, the to-be-positioned node 101 may send a second ranging packet to the primary node, and record time t3 at which the to-be-positioned node 101 sends the second ranging packet. Data in the second ranging packet may include t2 and t3. The primary node may receive the second ranging packet at a moment t4, and record time t4 at which the primary node receives the second ranging packet. In this way, the primary node obtains four pieces of intermediate data: t1, t2, t3, and t4. The primary node may calculate average flight time $T = ((t4- t1)- (t3- t2))/2$ of the first ranging packet and the second ranging packet. Then, the primary node may calculate the distance $L1=T*c$ between the primary node and the to-be-positioned node 101, where c is a speed at which an electromagnetic wave propagates in the air. In this example, the intermediate data A obtained by the primary node may include t1 and t4, and the intermediate data B obtained by the to-be-positioned node may include t2 and t3. The primary node may receive the intermediate data B sent by the to-be-positioned node 101. Further, the node 1 may determine the distance L1 between the node 1 and the to-be-positioned node based on the intermediate data A obtained by the node 1 and the received intermediate data B.

This is not limited to the foregoing ranging method. The primary node may alternatively perform ranging with the to-be-positioned node 101 by using another ranging method. It may be understood that, when the primary node performs ranging with the to-be-positioned node 101, more or fewer interaction processes than those shown in the figure may be included. The intermediate data A and the intermediate data B may also include more or less intermediate data. The intermediate data may also be data other than time in which the ranging packet is sent or received. The ranging method between the primary node and the to-be-positioned node is not limited in this embodiment of this application.

In some embodiments, step S41 is optional. To be specific, the primary node may establish only the second connection, and does not perform ranging with the to-be-positioned node 101.

S42: That the secondary node 1 performs ranging with the to-be-positioned node through the second connection, to obtain a distance L2 includes:

S421: The primary node sends the first parameter and second clock information to the secondary node 1.

In some embodiments, the primary node may send the first parameter and the second clock information to the secondary node 1. In this way, the secondary node 1 may communicate with and perform ranging with the to-be-positioned node 101 based on the first parameter and the second clock information through the second connection. The second clock information may include a second time period. The secondary node 1 may communicate with and perform ranging with the to-be-positioned node in the second time period. The second time period is a subset of the first time period.

It may be understood that, after receiving the first parameter and the second clock information, the secondary node 1 may communicate with and perform ranging with the to-be-positioned node 101 through the second connection. For example, the second connection is Bluetooth. The first parameter received by the secondary node 1 may include a frequency hopping sequence and a key of a Bluetooth connection and the MAC address of the to-be-positioned node 101. After receiving the frequency hopping sequence of the second connection, the secondary node 1 may adjust a channel on which the secondary node 1 is located to a channel on which the to-be-positioned node 101 is located. In addition, the secondary node 1 may change the channel based on the frequency hopping sequence, so that the channel of the secondary node 1 keeps consistent with that of the to-be-positioned node 101. In this way, the secondary node 1 can receive the packet from the to-be-positioned node 101. After receiving the packet from the to-be-positioned node 101, the secondary node 1 may decrypt the packet by using the key. The key may be negotiated by the primary node and the to-be-positioned node 101 in step S401. After decrypting the packet, the secondary node 1 may determine that a destination address of the packet is the MAC address of the primary node 1. The secondary node 1 may receive the packet, and extract data segment information from the packet. Similarly, the secondary node 1 may also send the packet to the to-be-positioned node 101, and encrypt the packet by using the key. A source address of the packet sent by the secondary node may be the MAC address of the primary node.

Further, the secondary node 1 may receive the second clock information sent by the primary node. The secondary node 1 may communicate with and perform ranging with the to-be-positioned node based on the time period included in the second clock information. In this way, a conflict with another positioning node can be avoided. It may be understood that in step S401, the primary node may determine a large time period with the to-be-positioned node. Further, the primary node may divide the large time period into a plurality of small time periods. The primary node may allocate the plurality of small time periods to different secondary nodes. Each secondary node may communicate with and perform ranging with the to-be-positioned node in a time period allocated to the secondary node. This can avoid a conflict generated when a plurality of positioning nodes communicate with the to-be-positioned node 101. For example, the first time period may be 0 to 500 pieces of clock time. In this case, the second time period may be a 100th clock to a 200th clock. The secondary node 1 may determine the second time period based on the second clock information, and then perform step S422 when the clock time is in the 100th clock to the 200th clock.

S422: The secondary node 1 performs ranging with the to-be-positioned node, the secondary node 1 obtains intermediate data C, and the to-be-positioned node obtains intermediate data D.

S423: The secondary node 1 sends the intermediate data C to the primary node.

S424: The to-be-positioned node sends the intermediate data D to the primary node.

S425: The primary node determines the distance L2 between the secondary node 1 and the to-be-positioned node based on the intermediate data C and the intermediate data D.

In some embodiments, the secondary node 1 may agree on a ranging parameter with the to-be-positioned node 101. Further, the secondary node 1 and the to-be-positioned node may perform ranging based on the agreed ranging parameter. The ranging parameter between the secondary node 1 and the to-be-positioned node 101 may be different from the ranging parameter between the primary node and the to-be-positioned node 101.

In some other embodiments, the ranging parameter between the secondary node 1 and the to-be-positioned node may be determined by the primary node and the to-be-positioned node in step S402. The secondary node 1 may receive the ranging parameter sent by the primary node. In this way, the secondary node 1 can directly perform ranging with the to-be-positioned node without agreeing on the ranging parameter with the to-be-positioned node 101.

For the method for ranging between the secondary node 1 and the to-be-positioned node, refer to the descriptions of S41 in the foregoing embodiment. Details are not described herein again.

In some embodiments, the primary node may receive the intermediate data C sent by the secondary node 1 and the intermediate data D sent by the to-be-positioned node. Further, the primary node may determine the distance L2 between the secondary node 1 and the to-be-positioned node based on the intermediate data C and the intermediate data D. The distance L2 may also be referred to as a first distance.

S43: That the secondary node 2 performs ranging with the to-be-positioned node through the second connection, to obtain a distance L3 includes:

S431: The primary node sends the first parameter and third clock information to the secondary node 2.

S432: The secondary node 2 performs ranging with the to-be-positioned node, the secondary node 2 obtains intermediate data E, and the to-be-positioned node obtains intermediate data F.

S433: The secondary node 2 sends the intermediate data E to the primary node.

S434: The to-be-positioned node sends the intermediate data F to the primary node.

S435: The primary node determines the distance L3 between the secondary node 2 and the to-be-positioned node based on the intermediate data E and the intermediate data F.

The third clock information may include a third time period. The third time period may be a subset of the first time period. A start time point of the third time period may be later than an end time point of the second time period. The second time period does not intersect with the third time period. The secondary node 2 may receive a packet including the third clock information, and then communicate with and perform ranging with the to-be-positioned node 101 based on the third time period corresponding to the third clock information. In this way, a conflict generated by ranging performed by the secondary node 1 can be avoided.

For a method for receiving the first parameter and the third clock information by the secondary node 2 and communicating with the to-be-positioned node, refer to the descriptions of S421 and S422. For a method for obtaining the distance L3 by the primary node after the secondary node 2 performs ranging with the to-be-positioned node, refer to the descriptions of step S413. Details are not described herein again. The distance L3 may also be referred to as a second distance.

S44: That the primary node positions the to-be-positioned node based on the distance L1, the distance L2, and the distance L3 includes:

S441: The primary node determines the location of the to-be-positioned node based on the distance L1, the distance L2, and the distance L3.

In some embodiments, the primary node may receive the distance L2 sent by the secondary node 1 and the distance L3 sent by the secondary node 2. Further, the primary node may determine the location of the to-be-positioned node based on the distance L1, the distance L2, and the distance L3. The location of the to-be-positioned node may include a distance between the to-be-positioned node 101 and a vehicle 100 and an orientation of the to-be-positioned node 101 relative to the vehicle 100.

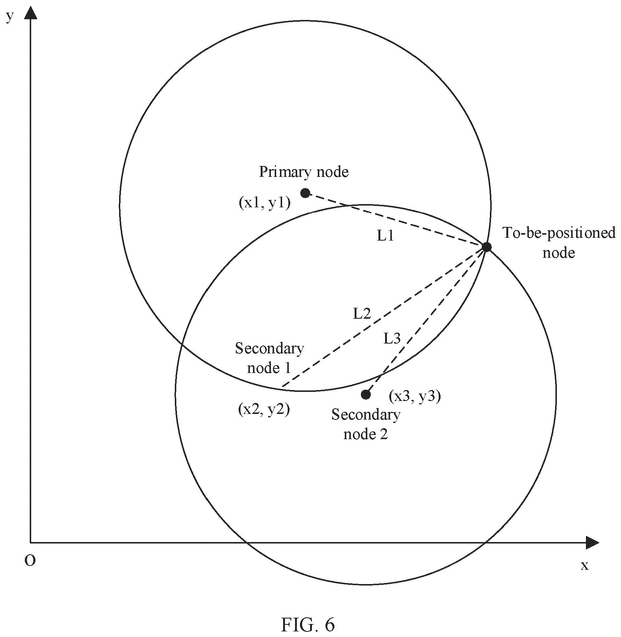

For example, a method for determining the location of the to-be-positioned node 101 by the primary node based on the distance L1, the distance L2, and the distance L3 is shown in FIG. 6. The primary node may construct a plane rectangular coordinate system by using a point on a ground plane as an origin. A plane on which the plane rectangular coordinate system is located is parallel to the ground plane. An x-axis of the plane rectangular coordinate system may be any direction of the plane on which the coordinate system is located, and a y-axis may be perpendicular to the x-axis. In this case, in the plane rectangular coordinate system, coordinates of the primary node may be (x1, y1), coordinates of the secondary node 1 may be (x2, y2), and coordinates of the secondary node 2 may be (x3, y3). The primary node may determine a location (x, y) of the to-be-positioned node 101 according to the following equation set:

$$\begin{cases} \sqrt{(x-x1)^2 + (y-y1)^2} \\ \sqrt{(x-x2)^2 + (y-y2)^2} \\ \sqrt{(x-x3)^2 + (y-y3)^2} \end{cases}$$

The primary node may determine coordinates (x, y) of the to-be-positioned node 101 in the plane rectangular coordinate system, to determine the distance between the to-be-positioned node 101 and the vehicle 100 and the orientation of the to-be-positioned node 101 relative to the vehicle 100. The foregoing method for establishing the coordinate system by the primary node is merely used as an example, and does not constitute a limitation on this embodiment of this application. This is not limited to the method for determining the location of the to-be-positioned node by the primary node. The primary node may further determine the location of the to-be-positioned node 101 by using another method based on the distance L1, the distance L2, and the distance L3. The method for determining the location of the to-be-positioned node by the primary node is also not limited in this embodiment of this application.

In some embodiments, after determining the location of the to-be-positioned node 101, the primary node may further send the location of the to-be-positioned node to the to-be-positioned node 101. The to-be-positioned node 101 may determine the distance between the vehicle 100 and the to-be-positioned node 101 and a location of the vehicle 100 relative to the to-be-positioned node 101. Further, the to-be-positioned node 101 may prompt the user of the location of the vehicle 100 in a form of user interface display, voice broadcasting, or the like, to help the user find the vehicle 100 when the user is outside the vehicle.

In some embodiments, the primary node may gradually determine the location of the to-be-positioned node 101, and sequentially send the location of the to-be-positioned node to the to-be-positioned node 101. For example, after receiving the distance L2, the primary node may first determine the location of the to-be-positioned node 101 based on the distance L1 and the distance L2 The primary node may send a current positioning result to the to-be-positioned node 101. After the primary node receives the distance L3, the primary node may further determine the location of the to-be-positioned node 101 based on the distance L1, the distance L2, and the distance L3, and send the location to the to-be-positioned node 101. In this way, the vehicle 100 may first provide a preliminary positioning result for the user, and then gradually correct the positioning result, to reduce waiting time of the user.

In the positioning method shown in FIG. 4A to FIG. 4C, an execution sequence of the steps is merely used as an example, and is not used as a limitation on this embodiment of this application. For example, in some embodiments, S421 and S431 may be performed after S402 in S40. That is, after establishing the connection to the to-be-positioned node 101, the primary node may first send one or more of the first parameter, the clock information, and the ranging parameter to the secondary node 1 and the secondary node 2. Each secondary node performs ranging after the clock reaches preset time.

In some embodiments, an execution sequence of S41, S42, and S43 may be changed. For example, S42 is first performed, and then S43 is performed. A sequence of ranging performed by the positioning node is not limited in this embodiment of this application.

In some embodiments, S413, S425, and S435 may be performed before S441 in S44. To be specific, the primary node may determine a distance between each positioning node and the to-be-positioned node after ranging of all positioning nodes ends. It should be noted that after obtaining ranging information required for determining the distance, the primary node may determine the distance between the positioning node and the to-be-positioned node in any time period in which the primary node is idle. For example, after obtaining the intermediate data C and the intermediate data D in S423 and S424, the primary node may determine the distance L2 between the secondary node 1 and the to-be-positioned node 101 in any time period in S43. The secondary node 2 and the to-be-positioned node 101 may simultaneously perform communication and ranging, and determine the distance L2 with the primary node based on the intermediate data C and the intermediate data D.

This is not limited to the primary node that determines the distance between each positioning node and the to-be-positioned node 101, the secondary node may alternatively determine a distance between the secondary node and the to-be-positioned node.

In some embodiments, S423, S424, and S425 are optional. After the secondary node 1 performs ranging with the to-be-positioned node, the to-be-positioned node may send the intermediate data D to the secondary node 1. The secondary node 1 may determine the distance L2 between the secondary node 1 and the to-be-positioned node 101 based on the intermediate data C obtained by the secondary node 1 and the received intermediate data D. Further, the secondary node 1 may send the distance L2 to the primary node. In this way, the primary node may directly receive the distance L1 calculated by the secondary node 1.

In some embodiments, S433, S434, and S435 are optional. After the secondary node 2 performs ranging with the to-be-positioned node, the to-be-positioned node may send the intermediate data F to the secondary node 2. The secondary node 2 may determine the distance L3 between the secondary node 2 and the to-be-positioned node 101 based on the intermediate data E obtained by the secondary node 2 and the received intermediate data F. Further, the secondary node 1 may send the distance L3 to the primary node. In this way, the primary node may directly receive the distance L3 calculated by the secondary node 2.

This is not limited to the positioning node, in the vehicle, that determines the distance between the positioning node and the to-be-positioned node and/or the location of the to-be-positioned node 101, a processor outside the positioning node or a processing unit of an external cloud server of the vehicle 100 may alternatively determine the distance between the positioning node and the to-be-positioned node and/or the location of the to-be-positioned node 101.

In some embodiments, after the secondary node 1 performs ranging with the to-be-positioned node, the secondary node may send the intermediate data C to the processor outside the positioning node or the external cloud server, and the to-be-positioned node 101 may send the intermediate data D to the processor outside the positioning node or the external cloud server. The processor outside the positioning node or the processing unit of the external cloud server may determine the distance L2 between the secondary node 1 and the to-be-positioned node based on the intermediate data C and the intermediate data D. Similarly, another processor outside the positioning node or the processing unit of the external cloud server may also determine the distance L1 between the primary node and the to-be-positioned node and the distance L3 between the secondary node 2 and the to-be-positioned node. For a method for determining the distance between the positioning node and the to-be-positioned node by the another processor outside the positioning node or the external cloud server, refer to the method for determining the distance between the positioning node and the to-be-positioned node by the primary node in the foregoing embodiment. Details are not described herein again. Optionally, the another processor outside the positioning node or the external cloud server may alternatively determine the location of the to-be-positioned node based on the distance L1, the distance L2, and the distance L3.

In some embodiments, the processor outside the positioning node or the processing unit of the external cloud server may receive one or more distances, between the positioning node and the to-be-positioned node, that are sent by the positioning node, and determine the location of the to-be-positioned node based on the one or more distances.

Optionally, after determining the one or more distances between the positioning node and the to-be-positioned node and/or the location of the to-be-positioned node, the external cloud server may send the foregoing result to the vehicle 100.

In some embodiments, when dividing the first time period included in the first clock information, and determining a sequence of ranging of each secondary node, the primary node may first obtain received signal strength (received signal strength indicator, RSSI) between each secondary node and the to-be-positioned node. The primary node may allocate an earlier time period to a secondary node with a high RSSI, and allocate a later time period to a secondary node with a poor RSSI. In this way, a secondary node with a strong signal may first perform communication and ranging with the to-be-positioned node, to improve efficiency of communication and ranging between the secondary node and the to-be-positioned node.

In some embodiments, the secondary node 1 and/or the secondary node 2 may also be connected to one or more child nodes. After receiving one or more of the first parameter, the clock information, and the ranging parameter that are sent by the primary node, the secondary node may further divide the time period corresponding to the clock information. Further, the secondary node may send, to the child node, one or more of the first parameter, the ranging parameter, and the clock information processed by the secondary node, and the one or more child nodes connected to the secondary node perform ranging. Correspondingly, the secondary node may receive intermediate data obtained by the child node by communicating with and performing ranging with the to-be-positioned node 101, and the secondary node may determine the distance between the child node and the to-be-positioned node 101 based on the intermediate data. Alternatively, the secondary node may receive the distance, between the secondary node and the to-be-positioned node, that is obtained by the child node through calculation. In this way, the secondary node may send the distance between the one or more child nodes and the to-be-positioned node to the primary node.

Persons skilled in the art should understand that the vehicle 100 may include more or fewer positioning nodes. When the vehicle 100 includes more secondary nodes, refer to the method in which the secondary node 1 and the secondary node 2 communicate with and perform ranging with the to-be-positioned node 101 through the second connection after the primary node sends the first parameter, the clock information, and the ranging parameter to the secondary node 1 and the secondary node 2. Alternatively, the vehicle 100 may include fewer secondary nodes. In the positioning method shown in FIG. 4A to FIG. 4C, S42 or S43 is optional. In this embodiment of this application, a method for positioning the to-be-positioned node by using another quantity of positioning nodes is not described again.

In conclusion, positioning nodes may be divided into a primary node and a secondary node. The primary node may establish the connection to the to-be-positioned node. The secondary node may reuse the connection established by the primary node to communicate with and perform ranging with the to-be-positioned node. In this way, time for establishing the connection between the positioning node and the to-be-positioned node when the vehicle positions the to-be-positioned node can be reduced, and costs of maintaining the connection by the vehicle can be reduced. Finally, the primary node may determine the location of the to-be-positioned node based on the distance between the positioning node and the to-be-positioned node. The vehicle may provide a corresponding service for the user when the location of the to-be-positioned node meets a specific condition.

In some embodiments, the vehicle 100 may provide an insensible unlocking function for the user. The vehicle 100 may be automatically unlocked when the distance between the to-be-positioned node 101 and the vehicle 100 is less than a preset distance threshold. The positioning method provided in the foregoing embodiment is implemented, so that time for the vehicle 100 to determine that the distance between the to-be-positioned node 100 and the vehicle 100 is less than the preset distance threshold can be shortened, and waiting time of the user can be reduced. In this way, the user can feel that the vehicle 100 provides a more insensible unlocking function, thereby improving use experience of the user. In addition, because a reliable connection is established between the positioning node and the to-be-positioned node, the positioning node and the to-be-positioned node may exchange more information in a time period in which the communication connection is kept. In this way, positioning accuracy of the vehicle 100 can be improved.

In some embodiments, the vehicle 100 may provide a location sharing function for the user. The to-be-positioned node 101 may be an electronic device such as a smartphone or a smart watch of the user. The primary node may send the location of the to-be-positioned node 101 and the location of the vehicle 100 to the to-be-positioned node 101. In this way, the to-be-positioned node 101 may determine the orientation and the distance of the to-be-positioned node 101 relative to the vehicle. The user may learn of the location of the vehicle 100 through a user interface displayed by the to-be-positioned node 101 or a voice prompt of the to-be-positioned node 101. The positioning method provided in the foregoing embodiment is implemented, so that the user can obtain the location and the distance of the vehicle 100 relative to the user more quickly, and the user can find the vehicle 100 more quickly.

It may be understood that the vehicle 100 may further provide more functions for the user when the location of the to-be-positioned node 101 meets the specific condition. The foregoing functions may be preset by the vehicle 100, or may be set by the user. In this embodiment of this application, the functions provided by the vehicle 100 for the user when the location of the to-be-positioned node 101 meets the specific condition are not limited.

The foregoing mainly describes the positioning method provided in embodiments of this application. It may be understood that, to implement the foregoing corresponding functions, each control unit or device includes corresponding hardware structures and/or software modules for performing the functions. In combination with example units and steps described in embodiments disclosed in this specification, this application can be implemented in a form of hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

When each functional module is obtained through division based on each corresponding function, embodiments of this application further provide an apparatus configured to implement any one of the foregoing methods, for example, provide an apparatus, including units (or means) configured to implement steps in any one of the foregoing methods.

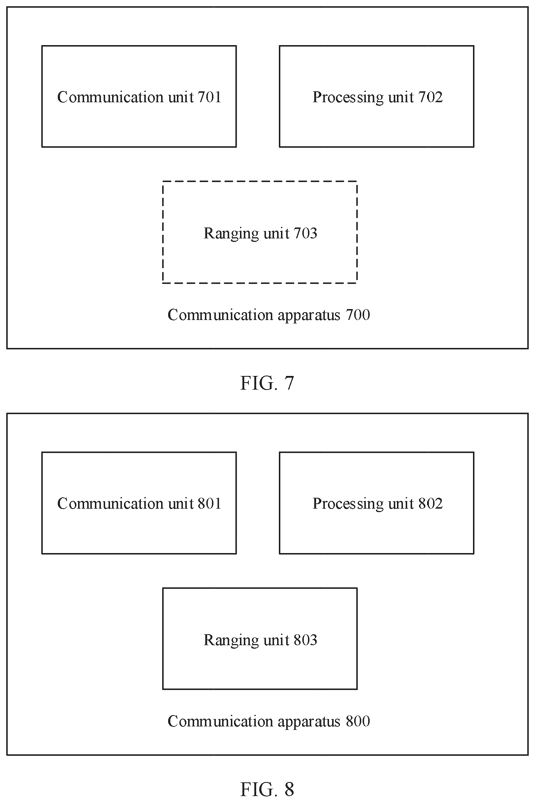

**For example, FIG. 7 is a diagram of a structure of a communication apparatus 700 according to an embodiment of this application.**

The communication apparatus 700 shown in FIG. 7 may be a communication apparatus configured to implement the primary node in any embodiment of the foregoing positioning method. The communication apparatus 700 may include a communication unit 701 and a processing unit 702.

The communication unit 701 is configured to communicate with one or more secondary nodes through a first connection.

The communication unit 701 is further configured to establish a second connection to a to-be-positioned node.

The communication unit 701 is further configured to receive first data from the one or more secondary nodes through the first connection, where the first data includes first ranging information obtained by the one or more secondary nodes by performing ranging with the to-be-positioned node through the second connection.

The processing unit 702 is configured to determine a location of the to-be-positioned node based on the first data.

In some embodiments, the communication unit 701 is further configured to obtain a first parameter from the to-be-positioned node through the second connection.

The communication unit 701 is further configured to send the first parameter to the one or more secondary nodes.

In some embodiments, the communication unit 701 is further configured to determine first clock information with the to-be-positioned node.

In some embodiments, the first ranging information includes one or more distances between the one or more secondary nodes and the to-be-positioned node.

In some embodiments, the first data further includes second ranging information obtained by the to-be-positioned node by performing ranging with the one or more secondary nodes through the second connection, and the communication unit 701 is further configured to receive the second ranging information from the to-be-positioned node through the second connection. The processing unit 702 is further configured to determine one or more distances between the one or more secondary nodes and the to-be-positioned node based on the first ranging information and the second ranging information.

In some embodiments, the one or more secondary nodes include a first secondary node and a second secondary node, and a first time period includes a second time period and a third time period; the communication unit 701 is further configured to send second clock information to the first secondary node, where the second clock information is for indicating the first secondary node to communicate with the to-be-positioned node in the second time period through the second connection; and the communication unit 701 is further configured to send third clock information to the second secondary node, where the third clock information is for indicating the second secondary node to communicate with the to-be-positioned node in the third time period through the second connection, and end time of the second time period is earlier than start time of the third time period.

In some embodiments, the first ranging information includes third ranging information obtained by the first secondary node by performing ranging with the to-be-positioned node through the second connection and fourth ranging information obtained by the second secondary node by performing ranging with the to-be-positioned node through the second connection, and that the communication unit 701 receives first data from the one or more secondary nodes through the first connection includes: The communication unit 701 receives the third ranging information from the first secondary node through the first connection; and the communication unit 701 receives the fourth ranging information from the second secondary node through the first connection.

In some embodiments, the third ranging information includes a first distance between the first secondary node and the to-be-positioned node, and the fourth ranging information includes a second distance between the second secondary node and the to-be-positioned node.

In some embodiments, the first data further includes fifth ranging information obtained by the to-be-positioned node by performing ranging with the first secondary node through the second connection and sixth ranging information obtained by the to-be-positioned node by performing ranging with the second secondary node through the second connection; the communication unit 701 is further configured to receive the fifth ranging information and the sixth ranging information from the to-be-positioned node; the processing unit 702 is further configured to determine a first distance between the first secondary node and the to-be-positioned node based on the third ranging information and the fifth ranging information; and the processing unit 702 is further configured to determine a second distance between the second secondary node and the to-be-positioned node based on the fourth ranging information and the sixth ranging information.

In some embodiments, that the processing unit 702 determines a location of the to-be-positioned node based on the first data includes: The processing unit 702 determines the location of the to-be-positioned node based on the first distance and the second distance.

In some embodiments, the first data further includes a third distance between the communication apparatus 700 and the to-be-positioned node, and the communication apparatus further includes a ranging unit 703. The ranging unit 703 is configured to perform ranging with the to-be-positioned node through the second connection, to obtain seventh ranging information.

In some embodiments, the communication unit 701 is further configured to receive eighth ranging information from the to-be-positioned node; and the processing unit 702 is further configured to determine the third distance based on the seventh ranging information and the eighth ranging information.

In some embodiments, the communication unit 701 is further configured to send the location of the to-be-positioned node to the to-be-positioned node.

In some embodiments, the communication unit 701 may include a wireless communication unit and/or a wired communication unit. The wireless communication unit is configured for the communication apparatus 700 to communicate with another node through a wireless network. The wired communication unit may be configured for the communication apparatus 700 to communicate with another node through a wired network.

In some embodiments, the communication apparatus 700 may further include an upper-layer application interface.

For specific operations and beneficial effect of the units in the communication apparatus 700 shown in FIG. 7, refer to corresponding descriptions in FIG. 3 or FIG. 7 and the possible embodiments in FIG. 3 or FIG. 7. Details are not described herein again.

**For example, FIG. 8 is a diagram of a structure of a communication apparatus 800 according to an embodiment of this application.**

The communication apparatus 800 shown in FIG. 8 may be a communication apparatus configured to implement the secondary node in any embodiment of the foregoing positioning method. The communication apparatus 800 may include a communication unit 801 and a processing unit 802.

The communication apparatus 800 may be used in a vehicle. The vehicle includes a primary node, and the primary node may communicate with the communication apparatus 800 through a first connection. The primary node establishes a second connection to a to-be-positioned node, where the second connection is a wireless network connection. The communication apparatus 800 includes: a communication unit 801, configured to receive a first parameter from the primary node through the first connection, where the communication unit 801 is further configured to communicate with the to-be-positioned node based on the first parameter through the second connection; and a ranging unit 803, configured to perform ranging with the to-be-positioned node through the second connection, to obtain ninth ranging information, where the ninth ranging information is for determining a location of the to-be-positioned node.

In some embodiments, before the communication unit 801 communicates with the to-be-positioned node based on the first parameter through the second connection, the following is further included: The communication unit 801 receives second clock information sent by the primary node, where the second clock information includes a second time period, and the processing unit determines that time is in the second time period.

In some embodiments, the communication unit 801 is further configured to send the ninth ranging information to the primary node through the first connection, where the ninth ranging information is for determining a first distance between the communication apparatus and the to-be-positioned node.

In some embodiments, the communication unit 801 is further configured to receive tenth ranging information sent by the to-be-positioned node, where the tenth ranging information is obtained by the to-be-positioned node by performing ranging with the ranging unit through the second connection.

In some embodiments, the processing unit 802 is further configured to determine a first distance between the communication apparatus and the to-be-positioned node based on the ninth ranging information and the tenth ranging information; and the communication unit 801 is further configured to send the first distance to the primary node through the first connection.

It should be understood that division into the units in the apparatus is merely logical function division. During actual implementation, all or some of the units may be integrated into one physical entity, or may be physically separated. In addition, the unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, the unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All units in the foregoing apparatus may be implemented in a form of software invoked by the processor; or all units may be implemented in a form of a hardware circuit; or some units may be implemented in a form of software invoked by the processor, and a remaining part may be implemented in a form of a hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the hardware circuit may be a hardware circuit designed for artificial intelligence, and may be understood as an ASIC, for example, a neural network processing unit (Neural Network Processing Unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, the units may be integrated together and implemented in a form of a system-on-a-chip (system-on-a-chip, SOC). The SOC may include at least one processor, configured to implement any one of the foregoing methods or implement the functions of the units in the apparatus. Types of the at least one processor may be different, for example, may include a CPU and an FPGA, or a CPU and an artificial intelligence processor, or a CPU and a GPU, or the like.

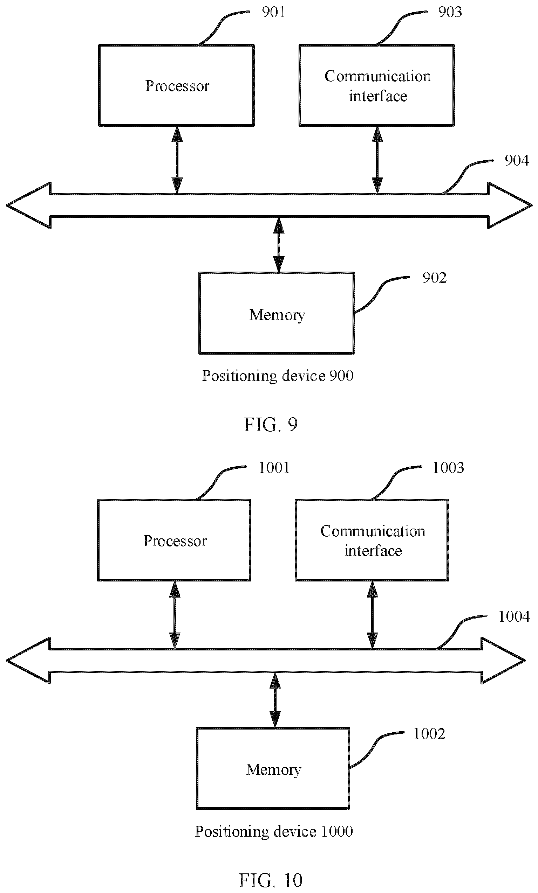

**For example, FIG. 9 is a diagram of a structure of a physical entity of a positioning device according to an embodiment of this application.**

The positioning device 900 shown in FIG. 9 may be the positioning node in the method in the foregoing embodiments. The positioning device 900 includes a processor 901, a memory 902, and a communication interface 903. The processor 901, the communication interface 903, and the memory 902 may be connected to each other, or may be connected to each other through a bus 904.

For example, the memory 902 is configured to store a computer program and data of the positioning device 900. The memory 902 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Software or program code required by all or some functions of the primary node in the foregoing method embodiments is stored in the memory 902.

In a possible implementation, if software or program code required by some functions is stored in the memory 902, the processor 901, in addition to invoking the program code in the memory 902 to implement some functions, may further cooperate with another component (for example, the communication interface 903) to jointly complete another function (for example, a function of receiving or sending data) described in the foregoing method embodiments.

There may be a plurality of communication interfaces 903, and the communication interfaces 903 are configured to support the positioning device 900 in performing communication, for example, receiving or sending data or a signal.

For example, the processor 901 may be a CPU, a GPU, an NPU, a TPU, a DPU, a microprocessor, a DSP, an ASIC, an FPGA, or a combination of at least two of these processor forms. The processor 901 may be configured to read a program stored in the memory 902, to perform operations performed by the primary node in FIG. 4A to FIG. 4C and the possible embodiments in FIG. 4A to FIG. 4C.

For specific operations and beneficial effect of the units in the positioning device 900 shown in FIG. 9, refer to corresponding descriptions in the foregoing method embodiments. Details are not described herein again.

**For example, FIG. 10 is a diagram of a structure of a physical entity of a positioning device according to an embodiment of this application.**

The positioning device 1000 shown in FIG. 10 may be the positioning node in the method in the foregoing embodiments. The positioning device 1000 includes a processor 1001, a memory 1002, and a communication interface 1003. The processor 1001, the communication interface 1003, and the memory 1002 may be connected to each other, or may be connected to each other through a bus 1004.

For example, the memory 1002 is configured to store a computer program and data of the positioning device 1000. The memory 1002 may include but is not limited to a random access memory (random access memory, RAM), a read-only memory (read-only memory, ROM), an erasable programmable read-only memory (erasable programmable read only memory, EPROM), a compact disc read-only memory (compact disc read-only memory, CD-ROM), or the like.

Software or program code required by all or some functions of the primary node in the foregoing method embodiments is stored in the memory 1002.

In a possible implementation, if software or program code required by some functions is stored in the memory 1002, the processor 1001, in addition to invoking the program code in the memory 1002 to implement some functions, may further cooperate with another component (for example, the communication interface 1003) to jointly complete another function (for example, a function of receiving or sending data) described in the foregoing method embodiments.

There may be a plurality of communication interfaces 1003, and the communication interfaces 1003 are configured to support the positioning device 1000 in performing communication, for example, receiving or sending data or a signal.

For example, the processor 1001 may be a CPU, a GPU, an NPU, a TPU, a DPU, a microprocessor, a DSP, an ASIC, an FPGA, or a combination of at least two of these processor forms. The processor 1001 may be configured to read a program stored in the memory 1002, to perform operations performed by the secondary node in FIG. 4A to FIG. 4C and the possible embodiments in FIG. 4A to FIG. 4C.

For specific operations and beneficial effect of the units in the positioning device 1000 shown in FIG. 10, refer to corresponding descriptions in the foregoing method embodiments. Details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in embodiments may be implemented by a computer program instructing related hardware. The program may be stored in a computer-readable storage medium. When the program is executed, the procedures in the method embodiments may be performed. The foregoing storage medium includes any medium that can store program code, for example, a ROM, a random access memory RAM, a magnetic disk, or an optical disc.

**Claims**

1. A positioning method, wherein the positioning method is applied to a vehicle, the vehicle comprises a primary node and one or more secondary nodes, the primary node communicates with the one or more secondary nodes through a first connection, and the method comprises:

   establishing, by the primary node, a second connection to a to-be-positioned node, wherein the second connection is a wireless network connection;
   receiving, by the primary node, first data from the one or more secondary nodes through the first connection, wherein the first data comprises first ranging information obtained by the one or more secondary nodes by performing ranging with the to-be-positioned node through the second connection; and
   determining, by the primary node, a location of the to-be-positioned node based on the first data.

2. The positioning method according to claim 1, wherein the method further comprises:

   obtaining, by the primary node, a first parameter from the to-be-positioned node through the second connection, wherein the first parameter is used by the one or more secondary nodes to communicate with the to-be-positioned node through the second connection; and
   sending, by the primary node, the first parameter to the one or more secondary nodes.

3. The positioning method according to claim 2, wherein the first parameter comprises one or more of the following: a frequency, a frequency hopping sequence, and a key of the second connection.

4. The positioning method according to any one of claims 1 to 3, wherein the method further comprises: determining, by the primary node, first clock information with the to-be-positioned node through the second connection, wherein the first clock information is for indicating the to-be-positioned node to communicate with the primary node or the one or more secondary nodes in a first time period.

5. The positioning method according to any one of claims 1 to 4, wherein the first ranging information comprises one or more distances obtained by the one or more secondary nodes by performing ranging with the to-be-positioned node.

6. The positioning method according to any one of claims 1 to 4, wherein the first data further comprises second ranging information obtained by the to-be-positioned node by performing ranging with the one or more secondary nodes through the second connection, and the method further comprises: receiving, by the primary node, the second ranging information from the to-be-positioned node through the second connection; and
   determining, by the primary node, one or more distances between the one or more secondary nodes and the to-be-positioned node based on the first ranging information and the second ranging information.

7. The positioning method according to claim 4, wherein the one or more secondary nodes comprise a first secondary node and a second secondary node, the first time period comprises a second time period and a third time period, and the method further comprises:

   sending, by the primary node, second clock information to the first secondary node, wherein the second clock information is for indicating the first secondary node to communicate with the to-be-positioned node in the second time period through the second connection; and
   sending, by the primary node, third clock information to the second secondary node, wherein the third clock information is for indicating the second secondary node to communicate with the to-be-positioned node in the third time period through the second connection, and end time of the second time period is earlier than start time of the third time period.

8. The positioning method according to claim 7, wherein the first ranging information comprises third ranging information obtained by the first secondary node by performing ranging with the to-be-positioned node through the second connection and fourth ranging information obtained by the second secondary node by performing ranging with the to-be-positioned node through the second connection, and the receiving, by the primary node, first data from the one or more secondary nodes through the first connection comprises:

receiving, by the primary node, the third ranging information from the first secondary node through the first connection, and receiving, by the primary node, the fourth ranging information from the second secondary node through the first connection.

9. The positioning method according to claim 8, wherein the third ranging information comprises a first distance between the first secondary node and the to-be-positioned node, and the fourth ranging information comprises a second distance between the second secondary node and the to-be-positioned node.

10. The positioning method according to claim 8, wherein the first data further comprises fifth ranging information obtained by the to-be-positioned node by performing ranging with the first secondary node through the second connection and sixth ranging information obtained by the to-be-positioned node by performing ranging with the second secondary node through the second connection, and the method further comprises:

receiving, by the primary node, the fifth ranging information from the to-be-positioned node through the second connection;
determining, by the primary node, a first distance between the first secondary node and the to-be-positioned node based on the third ranging information and the fifth ranging information;
receiving, by the primary node, the sixth ranging information from the to-be-positioned node through the second connection; and
determining, by the primary node, a second distance between the second secondary node and the to-be-positioned node based on the fourth ranging information and the sixth ranging information.

11. The positioning method according to claim 9 or 10, wherein the determining, by the primary node, a location of the to-be-positioned node based on the first data comprises:
determining, by the primary node, the location of the to-be-positioned node based on the first distance and the second distance.

12. The positioning method according to any one of claims 1 to 10, wherein the first data further comprises a third distance between the primary node and the to-be-positioned node, and the method further comprises:

performing, by the primary node, ranging with the to-be-positioned node through the second connection, to obtain seventh ranging information;
receiving, by the primary node, eighth ranging information from the to-be-positioned node; and
determining, by the primary node, the third distance based on the seventh ranging information and the eighth ranging information.

13. The positioning method according to any one of claims 1 to 12, wherein the method further comprises:
sending, by the primary node, the location of the to-be-positioned node to the to-be-positioned node.

14. A positioning method, wherein the positioning method is applied to a vehicle, the vehicle comprises a primary node and a first secondary node, the primary node communicates with the first secondary node through a first connection, the primary node establishes a second connection to a to-be-positioned node, the second connection is a wireless network connection, and the method comprises:

receiving, by the first secondary node, a first parameter from the primary node through the first connection; and
communicating, by the first secondary node, with the to-be-positioned node based on the first parameter through the second connection, and performing, by the first secondary node, ranging with the to-be-positioned node, to obtain ninth ranging information, wherein the ninth ranging information is for determining a location of the to-be-positioned node.

15. The positioning method according to claim 14, wherein before the communicating, by the first secondary node, with the to-be-positioned node based on the first parameter through the second connection, the method further comprises:

receiving, by the first secondary node, second clock information sent by the primary node, wherein the second clock information comprises a second time period; and
determining, by the first secondary node, that time is in the second time period.

16. The positioning method according to claim 14 or 15, wherein the method further comprises:
sending, by the first secondary node, the ninth ranging information to the primary node through the first connection, wherein the ninth ranging information is for determining a first distance between the first secondary node and the to-be-positioned node.

17. The positioning method according to claim 14 or 15, wherein the method further comprises:

receiving, by the first secondary node, tenth ranging information sent by the to-be-positioned node, wherein the tenth ranging information is obtained by the to-be-positioned node by performing ranging with the first secondary node through the second connection;
determining, by the first secondary node, a first distance between the first secondary node and the to-be-positioned node based on the ninth ranging information and the tenth ranging information; and
sending, by the first secondary node, the first distance to the primary node through the first connection.

18. The positioning method according to any one of claims 14 to 17, wherein the first parameter comprises one or more of the following: a frequency, a frequency hopping sequence, and a key of the second connection.

19. A communication apparatus, wherein the communication apparatus is used in a vehicle, the vehicle further comprises one or more secondary nodes, and the communication apparatus comprises:

a communication unit, configured to communicate with the one or more secondary nodes through a first connection, wherein
the communication unit is further configured to establish a second connection to a to-be-positioned node, wherein the second connection is a wireless network connection; and
the communication unit is further configured to receive first data from the one or more secondary nodes through the first connection, wherein the first data comprises first ranging information obtained by the one or more secondary nodes by performing ranging with the to-be-positioned node through the second connection; and
a processing unit, configured to determine a location of the to-be-positioned node based on the first data.

20. The communication apparatus according to claim 19, wherein the communication unit is further configured to obtain a first parameter from the to-be-positioned node through the second connection, wherein the first parameter is used by the one or more secondary nodes to perform ranging with the to-be-positioned node through the second connection; and
the communication unit is further configured to send the first parameter to the one or more secondary nodes.

21. The communication apparatus according to claim 20, wherein the first parameter comprises one or more of the following: a frequency, a frequency hopping sequence, and a key of the second connection.

22. The communication apparatus according to claims 19 to 21, wherein the communication unit is further configured to determine first clock information with the to-be-positioned node, wherein the first clock information is for indicating the to-be-positioned node to communicate with the communication unit or the one or more secondary nodes in a first time period.

23. The communication apparatus according to any one of claims 19 to 22, wherein the first ranging information comprises one or more distances between the one or more secondary nodes and the to-be-positioned node.

24. The communication apparatus according to any one of claims 19 to 22, wherein the first data further comprises second ranging information obtained by the to-be-positioned node by performing ranging with the one or more secondary nodes through the second connection;

the communication unit is further configured to receive the second ranging information from the to-be-positioned node through the second connection; and
the processing unit is further configured to determine one or more distances between the one or more secondary nodes and the to-be-positioned node based on the first ranging information and the second ranging information.

25. The communication apparatus according to claim 22, wherein the one or more secondary nodes comprise a first secondary node and a second secondary node, and the first time period comprises a second time period and a third time period;

the communication unit is further configured to send second clock information to the first secondary node, wherein the second clock information is for indicating the first secondary node to communicate with the to-be-positioned node in the second time period through the second connection; and
the communication unit is further configured to send third clock information to the second secondary node, wherein the third clock information is for indicating the second secondary node to communicate with the to-be-positioned node in the third time period through the second connection, and end time of the second time period is earlier than start time of the third time period.

26. The communication apparatus according to claim 22, wherein the first ranging information comprises third ranging information obtained by the first secondary node by performing ranging with the to-be-positioned node through the second connection and fourth ranging information obtained by the second secondary node by performing ranging with the to-be-positioned node through the second connection, and that the communication unit receives first data from the one or more secondary nodes through the first connection comprises:

the communication unit receives the third ranging information from the first secondary node through the first connection; and
the communication unit receives the fourth ranging information from the second secondary node through the first connection.

27. The communication apparatus according to claim 26, wherein the third ranging information comprises a first distance between the first secondary node and the to-be-positioned node, and the fourth ranging information comprises a second distance between the second secondary node and the to-be-positioned node.

28. The communication apparatus according to claim 26, wherein the first data further comprises fifth ranging information obtained by the to-be-positioned node by performing ranging with the first secondary node through the second connection and sixth ranging information obtained by the to-be-positioned node by performing ranging with the second secondary node through the second connection;

the communication unit is further configured to receive the fifth ranging information and the sixth ranging information from the to-be-positioned node;
the processing unit is further configured to determine a first distance between the first secondary node and the to-be-positioned node based on the third ranging information and the fifth ranging information; and
the processing unit is further configured to determine a second distance between the second secondary node and the to-be-positioned node based on the fourth ranging information and the sixth ranging information.

29. The communication apparatus according to claim 27 or 28, wherein that a processing unit determines a location of the to-be-positioned node based on the first data comprises:
the processing unit determines the location of the to-be-positioned node based on the first distance and the second distance.

30. The communication apparatus according to any one of claims 19 to 29, wherein the first data further comprises a third distance between the communication apparatus and the to-be-positioned node, and the communication apparatus further comprises a ranging unit;

the ranging unit is configured to perform ranging with the to-be-positioned node through the second connection, to obtain seventh ranging information;
the communication unit is further configured to receive eighth ranging information from the to-be-positioned node; and
the processing unit is further configured to determine the third distance based on the seventh ranging information and the eighth ranging information.

31. The communication apparatus according to any one of claims 19 to 30, wherein
the communication unit is further configured to send the location of the to-be-positioned node to the to-be-positioned node.

32. A communication apparatus, wherein the communication apparatus is used in a vehicle, the vehicle further comprises a primary node, the primary node communicates with the communication apparatus through a first connection, the primary node establishes a second connection to a to-be-positioned node, the second connection is a wireless network connection, and the communication apparatus comprises:

a communication unit, configured to receive a first parameter from the primary node through the first connection, wherein
the communication unit is further configured to communicate with the to-be-positioned node based on the first parameter through the second connection; and
a ranging unit, configured to perform ranging with the to-be-positioned node through the second connection, to obtain ninth ranging information, wherein the ninth ranging information is for determining a location of the to-be-positioned node.

33. The communication apparatus according to claim 32, wherein before the communication unit communicates with the to-be-positioned node based on the first parameter through the second connection, further comprising:

the communication unit receives second clock information sent by the primary node, wherein the second clock information comprises a second time period; and
a processing unit determines that time is in the second time period.

34. The communication apparatus according to claim 32 or 33, wherein the communication unit is further configured to send the ninth ranging information to the primary node through the first connection, wherein the ninth ranging information is for determining a first distance between the communication apparatus and the to-be-positioned node.

35. The communication apparatus according to claim 32 or 33, wherein

the communication unit is further configured to receive tenth ranging information sent by the to-be-positioned node, wherein the tenth ranging information is obtained by the to-be-positioned node by performing ranging with the ranging unit through the second connection;
the processing unit is further configured to determine a first distance between the communication apparatus and the to-be-positioned node based on the ninth ranging information and the tenth ranging information; and
the communication unit is further configured to send the first distance to the primary node through the first connection.

36. The communication apparatus according to any one of claims 32 to 35, wherein the first parameter comprises one or more of the following: a frequency, a frequency hopping sequence, and a key of the second connection.

37. A vehicle, wherein the vehicle comprises a primary node and one or more secondary nodes, the primary node is configured to perform the method according to any one of claims 1 to 13, and the secondary node is configured to perform the method according to any one of claims 14 to 18.

38. A vehicle, wherein the vehicle comprises a memory and a processor coupled to the memory, and the memory stores computer-executable instructions; and when the processor executes the computer-executable instructions, the vehicle is enabled to implement the method according to any one of claims 1 to 13; or
when the processor executes the computer-executable instructions, the vehicle is enabled to implement the method according to any one of claims 14 to 18.

39. A computer-readable storage medium, wherein the computer-readable storage medium stores a computer program or computer instructions, and the computer program or the computer instructions are executed by a processor to implement the method according to any one of claims 1 to 13; or
the computer program or the computer instructions are executed by a processor to implement the method according to any one of claims 14 to 18.

40. A computer program product, wherein when the computer program product is executed by a processor, the method according to any one of claims 1 to 13 is implemented; or
when the computer program product is executed by a processor, the method according to any one of claims 14 to 18 is implemented.

FIG. 1

FIG. 2

FIG. 3

| Primary node | Secondary node 1 | Secondary node 2 | To-be-positioned node 101 |
|---|---|---|---|

S40: The primary node establishes a second connection to the to-be-positioned node

S401: The primary node establishes the second connection to the to-be-positioned node, and obtains a first parameter and first clock information

S402: The primary node determines a ranging parameter with the to-be-positioned node

S41: The primary node performs ranging with the to-be-positioned node through the second connection, to obtain a distance L1

S411: The primary node performs ranging with the to-be-positioned node, the primary node obtains intermediate data A, and the to-be-positioned node obtains intermediate data B

S412: The to-be-positioned node sends the intermediate data B to the primary node

S413: The primary node determines the distance L1 between the primary node and the to-be-positioned node based on the intermediate data A and the intermediate data B

TO FIG. 4B     TO FIG. 4B     TO FIG. 4B     TO FIG. 4B

FIG. 4A

CONT.
FROM
FIG. 4A

CONT.
FROM
FIG. 4A

CONT.
FROM
FIG. 4A

CONT.
FROM
FIG. 4A

S421: The primary node sends the first parameter and
second clock information to the secondary node 1

S422: The secondary node 1 performs ranging with
the to-be-positioned node, the secondary node 1
obtains intermediate data C, and the to-be-positioned
node obtains intermediate data D

S42: The secondary node
1 performs ranging with
the to-be-positioned
node through the second
connection, to obtain a
distance L2

S423: The secondary node 1 sends the
intermediate data C to the primary node

S424: The to-be-positioned node sends the intermediate
data D to the primary node

S425: The primary node determines the distance L2 between the secondary node
1 and the to-be-positioned node based on the intermediate data C and the
intermediate data D

TO
FIG. 4C

TO
FIG. 4C

TO
FIG. 4C

TO
FIG. 4C

FIG. 4B

EP 4 622 307 A1

CONT.
FROM
FIG. 4B

CONT.
FROM
FIG. 4B

CONT.
FROM
FIG. 4B

CONT.
FROM
FIG. 4B

S431: The primary node sends the first parameter and third clock information to the secondary node 2

S432: The secondary node 2 performs ranging with the to-be-positioned node, the secondary node 2 obtains intermediate data E, and the to-be-positioned node obtains intermediate data F

S43: The secondary node 2 performs ranging with the to-be-positioned node through the second connection, to obtain a distance L3

S433: The secondary node 2 sends the intermediate data E to the primary node

S434: The to-be-positioned node sends the intermediate data F to the primary node

S435: The primary node determines the distance L3 between the secondary node 2 and the to-be-positioned node based on the intermediate data E and the intermediate data F

S44: The primary node positions the to-be-positioned node based on the distance L1, the distance L2, and the distance L3

S441: The primary node determines a location of the to-be-positioned node based on the distance L1, the distance L2, and the distance L3

FIG. 4C

t4–t1

Send a first
ranging packet

Receive the second
ranging packet

Primary
node

t1

t4

To-be-
positioned
node 101

t2

t3

Receive the first
ranging packet

Send a second
ranging packet

t3–t2

FIG. 5

FIG. 6

| | |
|---|---|
| Communication unit 701 | Processing unit 702 |

Ranging unit 703

Communication apparatus 700

FIG. 7

| | |
|---|---|
| Communication unit 801 | Processing unit 802 |

Ranging unit 803

Communication apparatus 800

FIG. 8

901

903

Processor

Communication
interface

904

902

Memory

Positioning device 900

FIG. 9

1001

1003

Processor

Communication
interface

1004

1002

Memory

Positioning device 1000

FIG. 10

## INTERNATIONAL SEARCH REPORT

<table>
<tr><td>International application No.</td></tr>
<tr><td>**PCT/CN2024/082309**</td></tr>
</table>

| A. | CLASSIFICATION OF SUBJECT MATTER |
|---|---|

H04W 4/029(2018.01)i

According to International Patent Classification (IPC) or to both national classification and IPC

| B. | FIELDS SEARCHED |
|---|---|

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 车, vehicle, 内, interior, 定位, locat+, position+, 手机, mobile phone, 终端, terminal, UE, 测距, distance, measur+, 主节点, master, node, 辅节点, slave

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114302334 A (CHONGQING JICHENG AUTOMOTIVE ELECTRONICS CO., LTD.) 08 April 2022 (2022-04-08) description, paragraphs 33-64 | 1-40 |
| A | CN 112235732 A (UNITED AUTOMOTIVE ELECTRONIC SYSTEMS CO., LTD.) 15 January 2021 (2021-01-15) entire document | 1-40 |
| A | WO 2021040351 A1 (SAMSUNG ELECTRONICS CO., LTD.) 04 March 2021 (2021-03-04) entire document | 1-40 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 May 2024** | **17 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082309**

| Patent document cited in search report | | | Publication date (day/month/year) | Patent family member(s) | | | Publication date (day/month/year) |
|---|---|---|---|---|---|---|---|
| CN | 114302334 | A | 08 April 2022 | None | | | |
| CN | 112235732 | A | 15 January 2021 | None | | | |
| WO | 2021040351 | A1 | 04 March 2021 | US | 2021058744 | A1 | 25 February 2021 |
| | | | | EP | 3990939 | A1 | 04 May 2022 |
| | | | | CN | 114729982 | A | 08 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310456029X